# EUROPÄISCHE PATENTSCHRIFT

(11) **EP 3 654 663 B1**
(45) Veröffentlichungstag und Bekanntmachung des Hinweises auf die Patenterteilung: **20.12.2023**
(21) Anmeldenummer: 19185988.3
(22) Anmeldetag: 12.07.2019
(51) Int. Cl.: H04Q 9/00, H04L 9/32, G06F 21/44

(54) **FREISCHALTUNG FÜR ELEKTRONISCHE VERBRAUCHSMENGENZÄHLER**
ACTIVATION FOR ELECTRONIC CONSUMPTION METERS
DISPOSITIF D'ACTIVATION POUR COMPTEURS DE CONSOMMATION ÉLECTRONIQUES

(30) Priorität: 19.11.2018 DE 102018129030
(43) Veröffentlichungstag der Anmeldung: 20.05.2020
(73) Patentinhaber: Innogy SE, 45128 Essen (DE)
(72) Erfinder: Nikodem, Torsten, 58453 Witten (DE); Radtke, Gerhard, 44869 Bochum (DE); Schmidt, Eugen, 46487 Wesel (DE)
(74) Vertreter: Cohausz & Florack

(56) Entgegenhaltungen:
- WO-A1-2017/106224
- US-A1- 2005 033 701
- US-A1- 2018 217 831
- Bundesamt Für Sicherheit In Der Informationstechnik: "Technische Richtlinie BSI TR-03116 Kryptographische Vorgaben für Projekte der Bundesregierung", , 23 April 2018 (2018-04-23), XP055540688, Retrieved from the Internet: URL:https://www.bsi.bund.de/SharedDocs/Dow nloads/DE/BSI/Publikationen/TechnischeRich tlinien/TR03116/BSI-TR-03116-3.pdf;jsessio nid=4FA254170E7A3A52DC68EB94C6C2B617.2_cid 341?__blob=publicationFile&v=8 [retrieved on 2019-01-10]
- Bundesamt: "Technische Richtlinie BSI TR-03109-1", , 16 January 2019 (2019-01-16), pages 1-146, XP055809276, Retrieved from the Internet: URL:https://www.bsi.bund.de/SharedDocs/Dow nloads/DE/BSI/Publikationen/TechnischeRich tlinien/TR03109/TR03109-1.html [retrieved on 2021-05-31]

## Beschreibung

### Gebiet

Beispielhafte Ausführungsformen der Erfindung betreffen die Freischaltung von Geräten, wie etwa elektronische Verbrauchsmengenzähler (z. B. intelligente Zähler für Strom, Gas, Wasser und/oder Wärme (sogenannte Smartmeter)), wobei die Freischaltung ohne einen physischen Zugriff auf die entsprechenden Geräte erfolgt und die Geräte anschließend nur von berechtigten Personen und/oder Instanzen z. B. fernablesbar sind.

### Hintergrund

Die von einem elektronischen Verbrauchsmengenzähler (z. B. ein sogenannter Smartmeter) erfassten Daten können beispielsweise zur Verhaltensanalyse der Kunden genutzt werden und bedürfen daher eines besonderen Schutzes. Es sollte sichergestellt sein, dass nur berechtigte Personen bzw. Instanzen einen Zugriff auf diese Daten erhalten. Aus dem Stand der Technik bekannte Technologien wie beispielsweise der sogenannte Wireless-MBus (Meter Bus) nutzen zwar für jegliche Datenübertragungen eine Verschlüsselung, jedoch handelt es sich hierbei um einen fixen Schlüssel, der nach dessen Kenntnis immer wieder genutzt werden kann. Dies macht einen Anschlussnehmerwechsel (z. B. bei einem Mieterwechsel einer Wohnung) kompliziert und teuer, weil nur durch einen Zählerwechsel sichergestellt werden kann, dass z. B. ein früherer Bewohner einer Wohnung, die den Zähler aufweist, den Zähler mit Verbrauchsdaten des neuen Bewohners der Wohnung nicht mittels des ihm bekannten fixen Schlüssels ab- bzw. auslesen kann.

Andere Technologien nutzen beispielsweise einen dynamisch erzeugten Schlüssel, der sicher zwischen dem Zähler und dem Empfänger ausgetauscht werden muss. Der Austausch wird meist durch einen Tastendruck am jeweiligen Gerät initiiert und das entsprechende Gerät in einen Modus versetzt, in dem es den neuen Schlüssel akzeptiert. Da die Zähler zumeist nicht in einem gesicherten Bereich montiert sind, kann ein physischer Zugang und damit ein Tastendruck zum Initiieren eines Schlüsselaustauschs mit einer nicht berechtigten Person bzw. Instanz mitunter nur schwer bzw. nicht verhindert werden.

Nachteilig ist also, dass ein Zugriff auf derartige elektronische Verbrauchsmengenzähler durch einen unberechtigten Dritten nicht ausgeschlossen werden kann. Gleiches gilt für weitere aus dem Stand der Technik bekannte Geräte, wie etwa IoT (Internet-of-Things) Geräte oder elektrische Steuergeräte für den Haushalt, sogenannte SmartHome Geräte.

Ferner ist nachteilig, dass eine Kopplung mit dem elektronischen Verbrauchsmengenzähler nicht ermöglicht ist, ohne dass eine Eingabe (z. B. Tastendruck) seitens des elektronischen Verbrauchsmengenzählers erfasst werden muss. Dies ist anfällig für Manipulationen, da zum Zugriff auf den elektronischen Verbrauchsmengenzähler unberechtigte Dritte lediglich einen Zugang zu der Taste zur Eingabe haben müssen.

Aus der US 2005/0033701 A1 ist ein zentrales System zum Empfangen von Berichten über die Nutzung von mehreren Verbrauchsmengenzählern bekannt. Hierbei werden Regelungen getroffen, welche gewährleisten, dass ein empfangener Bericht auch von einem Zähler gesendet wurde, welcher bei dem zentralen System registriert ist. Während des Registrierungsprozesses überträgt der Zähler seinen öffentlichen kryptografischen Schlüssel an das zentrale System. Mit jedem Bericht über die Verbrauchsmenge sendet der Zähler eine Version einer Nachricht, die mit seinem privaten kryptografischen Schlüssel verschlüsselt ist. Das zentrale System entschlüsselt diese Nachricht mit dem öffentlichen Schlüssel des Zählers. Wenn es mit einer unverschlüsselten Version der Nachricht übereinstimmt, ist gewährleistet, dass der Zähler den Bericht gesendet hat. Die unverschlüsselte Nachricht kann von dem zentralen System generiert und an den Zähler übertragen werden, oder sie kann von dem Zähler generiert und zusammen mit der verschlüsselten Version gesendet werden.

In den technischen Richtlinien des BSI, beispielsweise in der TR-03109-1, 2013 oder der TR-03116-3, 2015 sind Sicherheitsanforderungen für den Einsatz kryptografischer Verfahren bei intelligenten Messsystemen, beispielsweise bei Smart-Metering-Systemen, im Energiesektor beschrieben.

### Zusammenfassung einiger beispielhafter Ausführungsformen der Erfindung

Es wäre wünschenswert, eine Freischaltung z. B. über eine Datenschnittstelle für durch einen physischen Zugriff nicht zugängliche Geräte zu erreichen und/oder eine Freischaltung ohne eine Eingabe seitens eines elektronischen Verbrauchsmengenzählers erfassen zu müssen, zu ermöglichen, so dass nur berechtigte Personen Zugriff auf das über die Datenschnittstelle angebundene Geräte (z. B. Smartmeter, SmartHome Geräte, IoT Geräte), insbesondere elektronische Verbrauchsmengenzähler, erhalten und ein Zugriff bzw. eine Freischaltung zum Übertragen von seitens des elektronischen Verbrauchsmengenzählers erfassten Daten und/oder Informationen vor einer Manipulation durch unberechtigte Dritte geschützt ist.

Gemäß einem ersten Aspekt der Erfindung wird ein Verfahren offenbart, das folgendes umfasst:
- Erfassen einer Steuerinformation indikativ für zumindest einen externen Zählerwert, einen Initialisierungsvektor und eine Aktivierungscodeinformation, wobei die Aktivierungscodeinformation verschlüsselte Informationen umfasst;
- Überprüfen des externen Zählerwertes, wobei der externe Zählerwert mit einem lokal gespeicherten Zählerwert verglichen wird;
- für den Fall, dass der lokal gespeicherte Zählerwert kleiner ist, als der externe Zählerwert:
   - Entschlüsseln der Aktivierungscodeinformation zumindest teilweise basierend auf dem Initialisierungsvektor;
   - Bestimmen einer Überprüfungsinformation zumindest teilweise basierend einer Identifikationsinformation der Vorrichtung, dem externen Zählerwert und einer Servicekennungsinformation indikativ für eine gemäß der erfassten Steuerinformation angefragte und seitens der Vorrichtung durchzuführende Aktion, wobei die Servicekennungsinformation unter Berücksichtigung desjenigen Ports, über den die Steuerinformation erfasst wurde, bestimmt wird; und
   - Vergleich der bestimmten Überprüfungsinformation mit der Aktivierungscodeinformation; und
- Speichern des externen Zählerwertes als neuen lokal gespeicherten Zählerwert, so dass dieser gespeicherte Zählerwert zur Überprüfung eines nächsten erfassten Zählerwertes verwendet wird.

Dieses Verfahren wird beispielsweise von einer Vorrichtung bzw. einer Steuereinrichtung für eine Vorrichtung durchgeführt. Eine derartige Steuereinrichtung ist beispielsweise von einer Zählervorrichtung (z. B. elektronischer Verbrauchsmengenzähler) umfasst oder zumindest mit dieser (elektrisch) verbindbar. Die Zählervorrichtung ist insbesondere ein elektrischer Verbrauchsmengenzähler bzw. intelligenter Zähler (ein sogenanntes Smartmeter), z. B. zum Erfassen (z. B. Zählen) von Strom, Gas, Wasser und/oder Wärme. Alternativ wird dieses Verfahren von einer derartigen Zählervorrichtung durchgeführt.

Es wird ferner eine Vorrichtung nach dem ersten Aspekt der Erfindung offenbart, die zur Ausführung des Verfahrens nach dem ersten Aspekt der Erfindung eingerichtet ist oder jeweilige Mittel zur Ausführung der Schritte des Verfahrens gemäß dem ersten Aspekt der Erfindung umfasst. Ein oder mehrere der Mittel können auch durch die gleiche Einheit ausgeführt und/oder gesteuert werde. Beispielsweise können ein oder mehrere der Mittel durch einen oder mehrere Prozessoren gebildet sein. Die Zählervorrichtung repräsentiert beispielsweise die Vorrichtung nach dem ersten Aspekt der Erfindung. Ferner wird eine Vorrichtung nach dem ersten Aspekt der Erfindung offenbart, die zumindest einen Prozessor und zumindest einen Speicher, der Programmcode beinhaltet, umfasst, wobei der Speicher und der Programmcode eingerichtet sind, mit dem zumindest einen Prozessor eine Vorrichtung (beispielsweise die Vorrichtung mit dem Prozessor und dem Speicher) dazu zu veranlassen, zumindest das Verfahren gemäß dem ersten Aspekt der Erfindung auszuführen.

Es wird ein Computerprogramm nach dem ersten Aspekt der Erfindung offenbart, das Programmanweisungen umfasst, die einen Prozessor zur Ausführung des Verfahrens gemäß dem ersten Aspekt der Erfindung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, elektro-magnetischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium ist beispielsweise gegenständlich, also greifbar, und/oder nicht-transitorisch.

Gemäß einem zweiten Aspekt der Erfindung wird ein Verfahren offenbart, das folgendes umfasst:
- Bestimmen einer Aktivierungscodeinformation, wobei die Aktivierungscodeinformation basierend auf einer Identifikationsinformation einer Vorrichtung, einem Zählerwert und einer Servicekennungsinformation indikativ für eine seitens der Vorrichtung durchzuführende Aktion bestimmt wird;
- Verschlüsseln der Aktivierungscodeinformation zumindest teilweise basierend auf einem Initialisierungsvektor;
- Bestimmen einer Steuerinformation basierend auf der Aktivierungscodeinformation, dem Initialisierungsvektor und dem Zählerwert;
- Ausgeben oder Veranlassen des Ausgebens der Steuerinformation; und
- Speichern eines neuen Zählerwertes, wobei der gespeicherte Zählerwert einen höheren Wert repräsentiert als der im Rahmen des Bestimmen der Aktivierungscodeinformation verwendete Zählerwert, so dass dieser gespeicherte Zählerwert zum Bestimmen einer weiteren Aktivierungscodeinformation verwendet wird,
- wobei das Ausgeben oder Veranlassen des Ausgebens der Steuerinformation in Abhängigkeit einer durchzuführenden Aktion erfolgt, an einen Port, über den die Vorrichtung die Steuerinformation erfassen kann.

Dieses Verfahren wird beispielsweise von einem Gateway und/oder von einem Server durchgeführt. Ein derartiges Gateway und/oder ein derartiger Server sind beispielsweise mit der Vorrichtung nach dem ersten Aspekt der Erfindung (elektrisch) verbindbar, z. B. mittels eines Kommunikationsnetzes (z. B. dem Internet). Bei einem derartigen Server kann es sich beispielsweise um ein Key-Management-System handeln, das beispielsweise von einem Betreiber (z. B. ein Messstellenbetreiber) von einer oder mehreren Vorrichtungen nach dem ersten Aspekt der Erfindung betrieben wird, so dass die Verfahren nach dem ersten Aspekt und dem zweiten Aspekt zusammen ausgeführt werden können.

Es wird ferner eine Vorrichtung nach dem zweiten Aspekt der Erfindung offenbart, die zur Ausführung des Verfahrens nach dem zweiten Aspekt der Erfindung eingerichtet ist oder jeweilige Mittel zur Ausführung der Schritte des Verfahrens gemäß dem zweiten Aspekt der Erfindung umfasst. Ein oder mehrere der Mittel können auch durch die gleiche Einheit ausgeführt werden. Beispielsweise können ein oder mehrere der Mittel durch einen oder mehrere Prozessoren gebildet sein.

Ferner wird eine Vorrichtung nach dem zweiten Aspekt der Erfindung offenbart, die zumindest einen Prozessor und zumindest einen Speicher, der Programmcode beinhaltet, umfasst, wobei der Speicher und der Programmcode eingerichtet sind, mit dem zumindest einen Prozessor eine Vorrichtung (beispielsweise die Vorrichtung mit dem Prozessor und dem Speicher) dazu zu veranlassen, zumindest das Verfahren gemäß dem zweiten Aspekt der Erfindung auszuführen. Dabei können alle Schritte des Verfahrens ausgeführt werden.

Es wird ein Computerprogramm nach dem zweiten Aspekt der Erfindung offenbart, das Programmanweisungen umfasst, die einen Prozessor zur Ausführung des Verfahrens gemäß dem zweiten Aspekt der Erfindung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, elektro-magnetischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium ist beispielsweise gegenständlich, also greifbar, und/oder nicht-transitorisch.

Gemäß einem dritten beispielhaften Aspekt der Erfindung wird ein System offenbart, das eine oder mehrere Vorrichtungen nach dem ersten Aspekt der Erfindung, die eingerichtet sind zur Ausführung des Verfahrens gemäß dem ersten Aspekt der Erfindung oder Mittel zur Ausführung der Schritte des Verfahrens gemäß dem ersten Aspekt der Erfindung aufweisen und eine oder mehrere Vorrichtungen nach dem zweiten Aspekt der Erfindung, die eingerichtet sind zur Ausführung des Verfahrens gemäß dem zweiten Aspekt der Erfindung oder Mittel zur Ausführung der Schritte des Verfahrens gemäß dem zweiten Aspekt der Erfindung aufweisen umfasst. Beispielsweise ist die zumindest eine erste Vorrichtung mit der zumindest einen zweiten Vorrichtung koppelbar ist, so dass zwischen diesen Informationen übermittelbar sind.

Diese drei Aspekte der vorliegenden Erfindung weisen u.a. die nachfolgend beschriebenen - teilweise beispielhaften - Eigenschaften auf.

Die Vorrichtung ist beispielsweise ein loT Gerät, ein SmartHome Gerät, oder ein elektronischer Verbrauchsmengenzäher (z. B. ein Smartmeter), z. B. zum Zählen von Strom, Gas, Wasser und/oder Wärme. Die Vorrichtung umfasst beispielsweise die Steuereinrichtung oder ist alternativ oder zusätzlich mit der Steuereinrichtung (z. B. elektrisch) verbindbar. Die Vorrichtung umfasst beispielsweise ein Zählmodul zum Erfassen (z. B. Messen) einer von einem Haushalt verbrauchten Menge Strom, Gas, Wasser und/oder Wärme. Die Vorrichtung umfasst beispielsweise ein Funkmodul zum drahtlosen Kommunizieren mit einer anderen Entität, z. B. der Vorrichtung nach dem zweiten Aspekt der Erfindung, z. B. über das Kommunikationsnetz. Alternativ ist das Funkmodul beispielsweise von der Steuereinrichtung umfasst oder mit dieser (elektrisch) verbindbar.

Der elektronische Verbrauchsmengenzähler ist beispielsweise ein digitaler elektronischer Verbrauchsmengenzähler (z. B. digitaler Stromzähler). Unter einem Smartmeter wird ein intelligenter Zähler, im engeren Sinne ein Stromzähler, verstanden, mittels welchem beispielsweise digital Daten empfangbar und/oder sendbar sind. Hierzu kann das Smartmeter beispielsweise in ein Kommunikationsnetz eingebunden sein. Dies kann beispielsweise über eine umfasste Kommunikationsschnittstelle realisiert sein. Der digitale Stromzähler kann beispielsweise über empfangene Daten gesteuert und/oder geregelt werden. Empfangene Daten können beispielsweise Tarifänderungen hinsichtlich des Preises von mittels einer Ladesäule zur Verfügung gestellter elektrischer Energie als auch erfasste Verbrauchsmengen von Strom, Gas, Wasser und/oder Wärme betreffen, um nur einige nicht-limitierende Beispiel zu nennen. Gesendete Daten können beispielsweise den zum Laden eines Elektrofahrzeugs und/oder einer Batterie eines Elektrofahrzeugs verbrauchten Strom betreffen. Diese Daten können beispielsweise an eine Vorrichtung nach dem zweiten Aspekt der Erfindung gesendet werden.

Ein Smartmeter ist insbesondere ein Bestandteil von intelligenten Stromnetzen, sogenannten Smartgrids.

Das Erfassen der Steuerinformation ist beispielsweise ein Empfangen der Steuerinformation von der Vorrichtung über ein Kommunikationsnetz (z. B. Internet). Der externe Zählerwert, der von der erfassten Steuerinformation umfasst oder repräsentiert ist, stammt beispielsweise von einem Server oder von einem Gateway, z. B. der bzw. das als Vorrichtung nach dem zweiten Aspekt der vorliegenden Erfindung ausgebildet sind. Die Steuerinformation wird beispielsweise von einem Gateway an die Vorrichtung nach dem ersten Aspekt der vorliegenden Erfindung übermittelt. Alternativ wird die Steuerinformation von dem Gateway beispielsweise weitergeleitet, wobei das Gateway die weitergeleitete Steuerinformation beispielsweise zuvor von einem Server (z. B. umfassend ein Key-Management-System (KMS)) erhält, z. B. über das Kommunikationsnetz. Ein derartiger Server wird beispielsweise von einem Messstellenbetreiber betrieben.

Der von der Steuerinformation umfasste externe Zählerwert, sowie der Initialisierungsvektor könne z. B. unmittelbar erfasst werden, indem der Zählerwert beispielsweise unverschlüsselt ist. Entsprechend ist der restliche Teil der erfassten Steuerinformation, insbesondere die Aktivierungscodeinformation beispielsweise verschlüsselt. Die Aktivierungscodeinformation umfasst beispielsweise die verschlüsselten Informationen: Identifikationsinformation der Vorrichtung, externer Zählerwert, sowie Servicekennungsinformation.

Die Steuerinformation kann beispielsweise mittels einer direkten Kommunikationsverbindung zwischen der Vorrichtung, und einem weiteren Gerät, dass z. B. von einem Mitarbeiter, der erfasste Verbrauchsmengen der Vorrichtung ablesen soll, an die Vorrichtung übermittelt werden. Die Steuerinformation wurde beispielsweise zuvor seitens eines Servers nach dem zweiten Aspekt der Erfindung (z. B. KMS-Server) basierend auf einer von dem weiteren Gerät an den Server erstellt und an das weitere Gerät übermittelt, so dass das weitere Gerät die Steuerinformation an die Vorrichtung nach dem ersten Aspekt der Erfindung weiterleiten kann. Diese weitergeleitete Steuerinformation wird beispielsweise seitens der Vorrichtung erfasst.

Das Überprüfen des externen Zählerwertes, wobei der erfasste externe Zählerwert mit einem (z. B. zuvor) gespeicherten lokalen Zählerwert verglichen wird, kann beispielsweise auch den Fall umfassen, dass kein lokaler Zählerwert zum Vergleich vorhanden ist. In diesem Fall kann das Verfahren nach dem ersten Aspekt der Erfindung nach dieser Feststellung abgebrochen werden, da das Überprüfen des Zählerwertes nicht zu einem positiven Ergebnis geführt hat. Es versteht sich, dass in diesem beschriebenen Fall beispielsweise noch das (erstmalige) Speichern des von der erfassten Streuwertinformation umfassten Zählerwertes erfolgen kann. Für den Fall, dass ein lokal gespeicherter Zählerwert vorhanden ist, kann entsprechend der Vergleich zwischen dem externen Zählerwert und dem lokal gespeicherten Zählerwert durchgeführt werden.

Das Überprüfen des externen Zählerwertes kann zusätzlich oder alternativ über ein Monotoniekriterium erfolgen. Entsprechend kann der Vergleich ein Überprüfen umfassen, ob der erfasste Zählerwert und der gespeicherte Zählerwert ein vorgegebenes Monotoniekriterium erfüllen oder nicht. Beispielsweise für den Fall, dass der erfasste (externe) Zählerwert und der gespeicherte Zählerwert ein vorgegebenes Monotoniekriterium nicht erfüllen, kann ein Abbruch der Steuerung und/oder Regelung des Verfahrens nach dem ersten Aspekt der Erfindung erfolgen.

Das vorgegebene Monotoniekriterium ist beispielsweise indikativ für eine steigende oder fallende Zahlenfolge. Unter einem Monotoniekriterium im Sinne des vorliegenden Gegenstands wird insbesondere ein Konvergenzkriterium verstanden, mit dem eine Konvergenz einer wachsenden oder fallenden Folge reeller Zahlen, hier der erfasste Zählerwert gegenüber einem gespeicherten Zählerwert nachgewiesen werden kann.

Das Bestimmen der Überprüfungsinformation erfolgt zumindest teilweise basierend auf der Identifikationsinformation, die lokal seitens der Vorrichtung gespeichert ist. Demnach ist diese Identifikationsinformation der Vorrichtung bekannt und wird nicht basierend auf einer erfassten Information bestimmt. Bei dem Initialisierungsvektor, basierend auf dem ferner das Bestimmen der Überprüfungsinformation erfolgt, handelt es sich hingegen um denjenigen Initialisierungsvektor, der von der erfassten Steuerinformation umfasst oder repräsentiert ist. Die Servicekennungsinformation wird für das Bestimmen der Überprüfungsinformation bestimmt, indem analysiert wird, über welchen Port die Steuerinformation seitens der Vorrichtung erfasst wurde (z. B. Port Nummer 1 für eine bestimmte durchzuführende Aktion seitens der Vorrichtung, Port Nummer 2 für eine weitere bestimmte durchzuführende Aktion seitens der Vorrichtung, um nur ein nicht-limitierendes Beispiel zu nennen).

Das Bestimmen einer Überprüfungsinformation erfolgt für den Fall, dass der gespeicherte Zählerwert kleiner ist, als der von der erfassten Steuerinformation umfasste bzw. repräsentierte (externe) Zählerwert. Alternativ versteht es sich, dass der Vergleich auch den erfassten Zählerwert der Steuerinformation durchführen kann, indem überprüft wird, ob der erfasste Zählerwert größer ist als der gespeicherte Zählerwert.

Anschließend wird ein Vergleich zwischen der von der Steuerinformation umfassten und entschlüsselten Aktivierungscodeinformation und der bestimmten Überprüfungsinformation durchgeführt.

Der Speicher ermöglicht beispielsweise das Speichern von einer oder mehreren Informationen, z. B. in einer Datenbank. Ein derartiger Speicher ist beispielsweise von der Vorrichtung umfasst und/oder mit dieser verbindbar. Die Datenbank ermöglicht es beispielsweise, dass eine oder mehrere Verknüpfungen zwischen zumindest zwei verschiedenen Informationen abgespeichert werden können, z. B. über eine von der Datenbank umfasste Look-Up Tabelle.

Das Speichern des erfassten (externen) Zählerwertes als neuer lokal gespeicherter Zählerwert ist beispielsweise ein Ersetzen eines bereits vorhandenen und lokal gespeicherten Zählerwertes für den Fall, dass ein entsprechender lokaler Zählerwert vorhanden ist. Alternativ ist das Speichern des erfassten Zählerwertes beispielsweise ein erstmaliges Speichern des erfassten Zählerwertes, z. B. in einem Speicher, der von der Vorrichtung nach dem ersten Aspekt der Erfindung umfasst oder mit dieser verbindbar ist, für den Fall, dass kein entsprechender lokaler Zählerwert vorhanden ist.

Gemäß einer beispielhaften Ausgestaltung nach dem ersten Aspekt der Erfindung umfasst das Verfahren für den Fall, dass der Vergleich zwischen der von der Steuerinformation umfassten und entschlüsselten Aktivierungscodeinformation und der bestimmten Überprüfungsinformation positiv ist ferner:
- Auslösen oder Veranlassen des Auslösens der Aktion, wobei die Aktion durch einen Port, über den die Vorrichtung die Steuerinformation erfasst hat, bestimmt.

Die Aktion ist beispielsweise indikativ für eine seitens einer mit der Vorrichtung bzw. mit der Steuereinrichtung verbindbaren Vorrichtung (z. B. Smartmeter) auszulösende Aktion. Diese Vorrichtung kann beispielsweise die Vorrichtung nach dem ersten Aspekt der Erfindung sein. Die Aktion ist beispielsweise von einer Servicekennung repräsentiert, die beispielsweise in dem lokalen Speicher vordefiniert ist, z. B. über ein Mapping zwischen der Servicekennung und einer auszulösenden Aktion.

Beispielsweise ist die Aktion in Abhängigkeit einer Servicekennungsinformation bestimmt, die etwa ein Ablesen eines Zählerstandes, eine Neueinrichtung der Vorrichtung nach dem ersten Aspekt der Erfindung für einen neuen Kunden, oder dergleichen, um nur einige nicht-limitierende Beispiele zu nennen, initiiert.

Die Aktion ist beispielsweise ein Übermitteln eines aktuell von mit der Vorrichtung (z. B. unmittelbar, d.h. in räumlicher Näher) verbundenen (z. B. intelligenten) Zählers (z. B. Strom- Gas-, Wasser-, und/oder Wärmezähler) erfassten Verbrauchsinformationen.

Gemäß einer beispielhaften Ausführungsform nach allen Aspekten der Erfindung repräsentieren die verschlüsselten Informationen der Aktivierungscodeinformation eine Streuwertinformation, die indikativ für einen Hashwert ist, der mittels einer Hashfunktion bestimmt ist, wobei ferner die Überprüfungsinformation bestimmt wird, indem die Hashfunktion zumindest teilweise auf die Identifikationsinformation der Vorrichtung, den externen Zählerwert und die Servicekennungsinformation angewendet wird, so dass die Überprüfungsinformation ebenfalls einen Hashwert repräsentiert, und wobei der Vergleich zwischen der bestimmten Überprüfungsinformation und der Aktivierungscodeinformation ein Vergleich zwischen zwei Hashwerten ist.

Beispielsweise repräsentiert die Aktivierungsinformation z. B. einen (z. B. symmetrisch) verschlüsselten Hashwert eines Datensatzes. Der Datensatz repräsentiert beispielsweise an die Vorrichtung nach dem ersten Aspekt der Erfindung zu übertragende Informationen. Entsprechend ist beispielsweise die Aktivierungsinformation ein Hashwert (z. B. SHA256). Ein derartiger Hashwert wird beispielsweise mittels einer Hashfunktion erzeugt, wobei die Hashfunktion eine (z. B. große) Eingabemenge (z. B. Schlüssel oder Informationen) auf eine kleinere Zielmenge (z. B. den bzw. die Hashwerte) abbildet.

Wenn der erfasste Hashwert und der erzeugter Hashwert gleich sind, kann beispielsweise eine Aktion seitens der Vorrichtung nach dem ersten Aspekt der Erfindung ausgeführt werden. Weitere Details hierzu sind im Nachfolgenden dieser Spezifikation noch erläutert.

Ein Hashfunktion liefert als Ergebnis stets Daten bzw. Informationen gleicher Länge, unabhängig von der Länge der Daten bzw. Informationen, die als Eingabemenge verwendet werden. Dies ermöglicht eine effiziente Datenübertragung, da die Menge der zu übertragenden Daten durch die verwendete Hashfunktion vorbestimmt ist.

Zunächst kann dann der erfasste (z. B. empfangene) Zählerwert mit einem gespeicherten Zählerwert verglichen werden, indem z. B. ein vorgegebenes Monotoniekriterium überprüft wird. Wenn der erfasste Zählerwert und der gespeicherte Zählerwert das vorgegebene Monotoniekriterium erfüllen, kann beispielsweise unter Verwendung des Initialisierungsvektors und einer lokal gespeicherten Schlüsselinformation die Aktivierungscodeinformation entschlüsselt werden. Anschließend wird die bestimmte Überprüfungsinformation, die beispielsweise ebenfalls einen Hashwert repräsentiert, mit dem von der Aktivierungscodeinformation repräsentierten Hashwert verglichen. Das Bestimmten der Überprüfungsinformation geschieht in analoger Weise zum Bestimmen der Aktivierungscodeinformation vor dem Erfassen, wobei die Aktivierungscodeinformation beispielsweise von der Vorrichtung nach dem zweiten Aspekt der Erfindung zunächst erstellt wurde, und dann zum Erfassen durch die Vorrichtung nach dem ersten Aspekt der Erfindung an diese übermittelt (z. B. gesendet) wurde. Die Aktivierungscodeinformation wird beispielsweise erzeugt, indem mit einer vorgegebenen (z. B. in dem Speicher gespeicherten Hashfunktion) ein Hashwert erzeugt wird. Dieser erzeugte Hashwert kann beispielsweise im Rahmen des Bestimmens der Überprüfungsinformation mit dem von der erfassten Aktivierungscodeinformation repräsentierten Hashwert verglichen werden. Es ist erforderlich, dass zuvor die verschlüsselte Aktivierungsinformation zum Vergleich der Hashwerte entschlüsselt wird, indem beispielsweise der erfasste (z. B. symmetrisch) verschlüsselte Hashwert der Aktivierungscodeinformation mit einem gespeicherten (z. B. in dem Speicher, der von der Vorrichtung nach dem ersten Aspekt der Erfindung umfasst ist) (z. B. symmetrischen) Schlüssel entschlüsselt wird.

Derart ist eine sichere Initialisierung der Vorrichtung (z. B. elektronischer Verbrauchsmengenzähler) bei gleichzeitiger Prüfung der Berechtigung der jeweiligen z. B. anfragenden Instanz ohne einen physischen Zugriff auf die bzw. zu der Vorrichtung nach dem ersten Aspekt der Erfindung (z. B. ein Smartmeter zum Zählen von Strom, Gas, Wasser und/oder Wärme) ermöglicht.

Dies ermöglicht eine Überprüfung der Berechtigung der anfragenden Instanz (von der der Zählerwert erfasst wird, z. B. ein Drittanbieter (Hausverwaltung), der z. B. für eine Abrechnungsauflistung einen oder mehrere aktuelle Zählerwerte abfragen möchte).

Gemäß einer beispielhaften Ausführungsform nach allen Aspekten der Erfindung erfolgt das Entschlüsseln der Aktivierungscodeinformation ferner basierend auf einer lokal gespeicherten Schlüsselinformation.

Die lokal gespeicherte Schlüsselinformation ist beispielsweise in einem von der Vorrichtung umfassten Speicher hinterlegt. Diese lokal gespeicherte Schlüsselinformation ist beispielsweise unveränderbar. Die lokal gespeicherte Schlüsselinformation ist beispielsweise derart vorbestimmt, dass diese im Rahmen der Herstellung der Vorrichtung (z. B. ausgebildet als elektronischer Verbrauchsmengenzähler) fest in dem Speicher eingespeichert wird. Der Speicher, in dem die lokal gespeicherte Schlüsselinformation hinterlegt ist, ist ferner beispielsweise gegenüber (z. B. physischen wie auch gegenüber Zugriffsversuchen über eine Kommunikationsschnittstelle von unberechtigten Dritten) Manipulationen geschützt. Die Schlüsselinformation ist beispielsweise indikativ für ein Geheimnis, z. B. eine kryptische Zeichenfolge oder dergleichen, insbesondere eine Zeichenfolge, die nur schwer erratbar ist. Eine Kopie der Schlüsselinformation ist ferner seitens eines Speichers des Servers, der das Verfahren nach dem zweiten Aspekt ausführt und/oder steuert gespeichert. Derart kann im Rahmen des Ausführens und/oder Steuerns des Verfahrens nach dem zweiten Aspekt der Erfindung die Schlüsselinformation zum Verschlüsseln der Aktivierungsinformation, die von der ausgegebenen (z. B. gesendeten) Steuerinformation (z. B. an die Vorrichtung, die das Verfahren nach dem ersten Aspekt der Erfindung ausführt und/oder steuert) umfasst oder repräsentiert ist, verwendet werden.

Gemäß einer beispielhaften Ausführungsform nach dem ersten Aspekt der Erfindung umfasst das Verfahren ferner:
- Überprüfen der Identifikationsinformation, so dass nur dann eine durchzuführende Aktion seitens der Vorrichtung durchgeführt wird, wenn es sich bei der erfassten Identifikationsinformation um die der Vorrichtung handelt.

Gemäß einer beispielhaften Ausführungsform nach allen Aspekten der Erfindung ist die Aktion eine der folgenden Aktionen i) bis iii) ist:
i) Starten eines Schlüsselaustauschmodus, so dass eine Kopplung zwischen der Vorrichtung und einer weiteren Entität möglich ist;
ii) Ausgeben von erfassten Verbrauchswerte indikativ für eine Menge von Strom, Gas, Wasser und/oder Wärme (z. B. an einen vorbestimmten Empfänger); oder
iii) Rücksetzen der Vorrichtung auf eine Werkeinstellung, bei der sämtliche lokal gespeicherten Daten und/oder Informationen bis auf die lokal gespeicherte Schlüsselinformation gelöscht sind.

Die weitere Entität ist beispielsweise ein Gateway oder Server. Die weitere Entität kann beispielsweise von der Vorrichtung nach dem zweiten Aspekt der Erfindung repräsentiert sein.

Die (erfolgreiche) Kopplung definiert beispielsweise die Entität, so dass beispielsweise angefragte Informationen, z. B. ein aktueller Zählerstand eines Verbrauchs von Strom, Gas, Wasser und/oder Wärme einer als Smartmeter ausgebildeten Vorrichtung nach dem ersten Aspekt der Erfindung beispielsweise (z. B. ausschießlich) an diese Entität übermittelt werden, um nur ein nicht-limitierendes Beispiel zu nennen. Ebenfalls kann es sich bei der weiteren Entität um das vorstehend beschriebene Gerät handeln, mittels dem ein Mitarbeiter der erfasste Verbrauchsmengen der Vorrichtung ablesen soll, die Steuerinformation an die Vorrichtung übermittelt. Beispielsweise werden beim Rücksetzen der Vorrichtung alle lokal gespeicherten Werte gelöscht und/oder die Vorrichtung werden in einen sogenannten Auslieferungszustand versetzt, bei dem seitens eines Herstellers vorgesehen Informationen auf der Steuereinrichtung oder der Vorrichtung hinterlegt werden. Beispielsweise ist in dem Auslieferungszustand zunächst kein Auslösen einer Aktion seitens der Vorrichtung möglich, z. B. bis eine Initialisierung abgeschlossen wurde.

Die erfassten Werte der Vorrichtung sind beispielsweise Werte, die von einem Strom-Gas-, Wasser- und/oder Wärmezähler, die von der Vorrichtung nach dem ersten Aspekt der Erfindung umfasst sind oder zumindest (elektrisch) mit dieser verbunden sind, gemessen wurden. Der definierte Empfänger ist beispielsweise eine gekoppelte Entität, wie etwa ein Gateway oder ein Server (z. B. Vorrichtung nach dem zweiten Aspekt der Erfindung) umfassend ein KMS, um nur einige nicht-limitierende Beispiele zu nennen.

Gemäß einer beispielhaften Ausführungsform nach dem ersten Aspekt der Erfindung umfasst das Verfahren ferner:
- Ausgeben oder Veranlassen des Ausgebens einer Feedbackinformation, wobei die Feedbackinformation basierend auf dem Ergebnis des Vergleiches bestimmt wird, wobei die Feedbackinformation indikativ für ein Ablehnen oder Bestätigen der durchzuführenden Aktion seitens der Vorrichtung ist, und/oder indikativ für eine Anfrage durch einen unberechtigten Dritten ist, für den Fall, dass der externe Zählerwert kleiner oder gleich zu dem lokal gespeicherten Zählerwert ist.

Für den Fall, dass der externe Zählerwert kleiner oder gleich zu dem lokal gespeicherten Zählerwert ist, kann davon ausgegangen werden, dass der erfasste externe Zählerwert bereits (zuvor) genutzt, und/oder manipuliert wurde und/oder zeitlich (z. B. mittels einem mit der erfassten Steuerinformation assoziierten Zeitstempel überprüfbar) abgelaufen ist. In diesem Fall kann die Feedbackinformation beispielsweise an einen Betreiber (z. B. Energieversorgungsunternehmen) der Vorrichtung (z. B. elektronischer Verbrauchsmengenzähler) übermittelt werden, so dass der Betreiber zumindest Kenntnis über den Manipulationsversuch hat.

Die Feedbackinformation kann beispielsweise eine Rückmeldung über den Misserfolg eines Vergleiches des Zählerwertes der erfassten Steuerinformation mit dem lokal gespeicherten Zählerwert geben, z. B. so dass diejenige Entität (z. B. die Vorrichtung nach dem zweiten Aspekt der Erfindung), von der die Steuerinformation beispielsweise empfangen wurde, eine entsprechende Rückmeldung erhält.

Das Ausgeben bzw. das Veranlassen des Ausgebens erfolgt beispielsweise an die Vorrichtung nach dem zweiten Aspekt der Erfindung. Alternativ erfolgt das Ausgeben bzw. das Veranlassen des Ausgebens beispielsweise an eine Entität, die von der Vorrichtung nach dem ersten Aspekt und der Vorrichtung nach dem zweiten Aspekt verschieden ist, wobei die ausgegebene Feedbackinformation dann beispielsweise von dieser Entität an die Vorrichtung nach dem zweiten Aspekt der Erfindung weitergeleitet wird.

Die zeitliche Assoziierung bzw. Verknüpfung ist beispielsweise in dem Speicher gespeichert, z. B. in der Look-Up Tabelle. Beispielsweise ist der lokal gespeicherte Zählerwert mit einer Zeitinformation indikativ für eine zeitlich beschränkte Gültigkeit des gespeicherten Zählerwertes, der nur innerhalb dieser durch die Zeitinformation definierten Gültigkeit zum Vergleich mit einem erfassten (z. B. empfangenen) Zählerwert herangezogen werden darf.

Gemäß einer beispielhaften Ausführungsform nach allen Aspekten der Erfindung ist der Initialisierungsvektor eine nach dem Zufallsprinzip bestimmte Zeichenfolge.

Der Initialisierungsvektor ist beispielsweise indikativ für eine Zufallszahl. Der Initialisierungsvektor ist beispielsweise von zumindest einem Teil der Aktivierungsinformation umfasst oder repräsentiert. Der Aktivierungscode wird beispielsweise generiert, indem ein sogenannter CBC (Cipher Block Chaining)-Modus auf zu verschlüsselnde Informationen angewendet wird. Anschließend kann beispielsweise der Initialisierungsvektor hinzugefügt werden, und dieses gesamte Konstrukt kann beispielsweise den Eingangsvektor für eine Hashfunktion bilden.

Gemäß einer beispielhaften Ausführungsform nach allen Aspekten der Erfindung erfolgt die Überprüfung des Zählerwertes ferner in Abhängigkeit von der durchzuführenden Aktion, wobei ein jeweiliger Zählerwert für eine jede der durchzuführenden Aktionen lokal gespeichert ist.

Die verschiedenen Services bzw. Dienste können beispielsweise eine Kundenschnittstelle zum Zugriff auf die Vorrichtung nach dem ersten Aspekt der Erfindung durch einen oder mehrere Kunden, und/oder eine Messbetreiberschnittstelle zum Zugriff auf die Vorrichtung nach dem ersten Aspekt der Erfindung durch einen Messstellenbetreiber darstellen. Die Services können beispielsweise von der Aktion mitdefiniert sein, die von der erfassten Streuwertinformation umfasst bzw. repräsentiert sein kann.

Gemäß einer beispielhaften Ausführungsform nach dem ersten Aspekt der Erfindung sind in dem Speicher beispielsweise ferner ein oder mehrere der folgenden Parameter i) bis vi) hinterlegt:
i) Identifikationsinformation der Vorrichtung;
ii) (z. B. asymmetrischer) Schlüsselinformation;
iii) Zählerwert (z. B. repräsentiert Anzahl von erfolgten Inklusionsvorgängen);
iv) MSB (Messstellenbetreiber) Zählerwert (z. B. indikativ für eine spezielle Aktion, z. B. Inklusion der Vorrichtung nach dem ersten Aspekt der Erfindung erfolgreich für den Fall, dass dieses Bit gesetzt ist (z. B. gleich 1));
v) Netzwerkschlüssel von einer Empfangseinheit, wenn diese von der Vorrichtung nach dem ersten Aspekt der vorliegenden Erfindung umfasst ist, so dass die Vorrichtung nach dem ersten Aspekt über ein mit dieser Empfangseinheit verbundenes Kommunikationsnetz (z. B. Internet) auf diese zugreifen kann, und optional auch umgekehrt; und
vi) temporär gültiger Einmalschlüssel der Vorrichtung (z. B. zur erstmaligen Inbetriebnahme der Vorrichtung nach dem ersten Aspekt).

Es versteht sich, dass einer oder mehrere der Parameter i) bis vi) seitens der Vorrichtung nach dem ersten Aspekt ausgegeben werden können bzw. deren Ausgabe veranlasst werden kann, z. B. an die Vorrichtung nach dem zweiten Aspekt der Erfindung.

Ferner können zusätzlich einer oder mehrere der folgenden Parameter vii) bis x) in dem Speicher hinterlegt sein. Diese im Nachfolgenden aufgeführten weiteren Parameter können alternativ beispielsweise in einem zweiten Speicher einer Empfangseinheit, die von der Vorrichtung nach dem ersten Aspekt der Erfindung separiert ist, und zumindest mit der Vorrichtung nach dem ersten Aspekt der Erfindung (elektrisch) verbunden ist, hinterlegt sein:
vii) öffentlicher Schlüssel einer von der Vorrichtung umfassten Empfangseinheit;
viii) privater Schlüssel der Empfangseinheit;
ix) Netzwerkschlüssel der Empfangseinheit; und
x) temporär gültiger Einmalschlüssel der Empfangseinheit.

Einer oder mehrere der Parameter vii) bis x) können seitens der Vorrichtung nach dem ersten Aspekt ausgegeben werden bzw. deren Ausgabe kann veranlasst werden, z. B. an die Vorrichtung nach dem zweiten Aspekt der Erfindung.

Gemäß einer beispielhaften Ausführungsform nach dem ersten Aspekt der Erfindung wird mit einer vorgegebenen Hashfunktion ein Hashwert erzeugt, wobei
- der erfasste (z. B. empfangene) symmetrisch verschlüsselte Hashwert der erfassten Streuwertinformation mit einem gespeicherten symmetrischen Schlüssel entschlüsselt wird; und
- der Hashwert der erfassten Streuwertinformation mit dem erzeugten Hashwert verglichen wird.

Das Erzeugen des Hashwertes wurde bereits vorstehend in dieser Spezifikation beschrieben, und erfolgt hier beispielsweise auf gleiche Art und Weise.

Gemäß einer beispielhaften Ausführungsform nach dem ersten Aspekt der Erfindung umfasst das Verfahren ferner:
- Bestimmen, ob eine Identifikationsinformation indikativ für ein eindeutiges Bestimmen der Vorrichtung von dem Zählerwert der erfassten Steuerinformation umfasst oder repräsentiert ist, und für den Fall, dass das Ergebnis der Überprüfung negativ ist:
- Übermitteln einer Beschreibungsinformation der Vorrichtung indikativ für einen oder mehrere die Vorrichtung (z. B. eindeutig) spezifizierende Parameter (z. B. Identifikationsinformation der Vorrichtung), so dass beispielsweise eine Inklusion der Vorrichtung (z. B. ausgebildet als intelligenter Zähler (Smartmeter)) seitens einer anfragenden Vorrichtung (z. B. ein Server und/oder Gateway ausgebildet als Vorrichtung nach dem zweiten Aspekt der Erfindung) durchführbar ist.

Der Server ist beispielsweise eine Vorrichtung nach dem zweiten Aspekt der Erfindung. Der Server umfasst beispielsweise ein KMS (Key Management System).

Alternativ zum Server kann das Verfahren nach dem zweiten Aspekt der Erfindung zusätzlich oder alternativ von einem Gateway gesteuert und/oder ausgeführt werden. Das Bestimmen der Steuerinformation gemäß dem Verfahren nach dem zweiten Aspekt der Erfindung umfasst z. B. ein Bestimmen (z. B. Generieren) der Aktivierungscodeinformation, z. B. basierend auf der Identifikationsinformation einer Vorrichtung (z. B. eine Vorrichtung nach dem ersten Aspekt der Erfindung), dem Zählerwert und der Servicekennungsinformation für eine intendierte seitens der Vorrichtung durchzuführende Aktion.

Gemäß einer beispielhaften Ausgestaltung nach dem zweiten Aspekt der Erfindung ist die Aktivierungscodeinformation von einem Hashwert repräsentiert, wobei der Hashwert mittels einer Hashfunktion, die auf die Identifikationsinformation, den Zählerwert und die Servicekennungsinformation angewendet wird, bestimmt ist.

Dass die Aktivierungscodeinformation von einem Hashwert repräsentiert ist, umfasst beispielsweise, dass die Aktivierungscodeinformation als Eingangsvektor für eine Hashfunktion verwendet werden.

Das Ausgeben oder Veranlassen des Ausgebens der Steuerinformation erfolgt beispielsweise durch ein Übermitteln der Steuerinformation, z. B. an zumindest eine Vorrichtung nach dem ersten Aspekt der Erfindung, um nur ein nicht-limitierendes Beispiel zu nennen.

Gemäß dem zweiten Aspekt der Erfindung erfolgt das Ausgeben oder das Veranlassen des Ausgebens der Steuerinformation in Abhängigkeit einer durchzuführenden Aktion, an einen Port, über den die Vorrichtung nach dem ersten Aspekt der Erfindung dann die ausgegebene zw. Die veranlasste Ausgabe der Steuerinformation erfasst (z. B. empfängt).

Das Speichern des (neuen) Zählerwertes erfolgt beispielsweise in einem Speicher, der von der Vorrichtung nach dem zweiten Aspekt der Erfindung umfasst oder zumindest mit dieser (elektrisch) verbindbar ist. Der Speicher umfasst beispielsweise eine Datenbank, in der der Zählerwert speicherbar ist.

Für den Fall, dass bereits ein Zählerwert in einem derartigen Speicher vorhanden ist, wird dieser bereits gespeicherte Zählerwert aktualisiert. Beispielsweise wird der Zählerwert aktualisiert, indem der nunmehr gespeicherte Zählerwert einen höheren Wert repräsentiert, als der zuvor gespeicherte Zählerwert. Beispielsweise kann der zu speichernde Zählerwert bestimmt werden, indem der in dem Speicher gespeicherte Zählerwert mit einer vorbestimmten Funktion (z. B. Zählerwert neu = Zählerwert alt + 1; um nur ein nicht-limitierendes Beispiel zu nennen) bestimmt wird.

Es kann für eine jede intendierte und seitens der Vorrichtung nach dem ersten Aspekt der Erfindung durchzuführende Aktion ein eigener Zählerwert im Rahmen des Verfahrens nach dem zweiten Aspekt der Erfindung verwendet werden.

Es versteht sich, dass der Zählerwert nicht ganzzahlig sein muss, und/oder auch nicht jeweils um genau die Zahl eins erhöht werden muss. Da im Rahmen des Verfahrens nach dem ersten Aspekt der Erfindung beispielsweise die Überprüfung des erfassten (z. B. empfangenen) Zählerwertes erfolgt, indem ein Monotoniekriterium angewendet wird, muss lediglich sichergestellt werden, dass der neue gespeicherte Zählerwert größer ist, als der zuvor gespeicherte Zählerwert. Eine Folge von gespeicherten Zählerwerten in reellen Zahlen kann beispielsweise 1, 1.2, 1.5, 5, 10, 11.9, und 18 repräsentieren, um nur ein nicht-limitierendes Beispiel für eine nicht ganzzahlige und stetige Erhöhung von einem jeweils chronologisch gespeicherten Zählerwert zu nennen.

Gemäß einer beispielhaften Ausführungsform nach dem zweiten Aspekt der Erfindung Erfolgt das Verschlüsseln der Aktivierungscodeinformation ferner basierend auf einer lokal gespeicherten Schlüsselinformation.

Hierbei handelt es sich beispielsweise um eine Schlüsselinformation, die z. B. nach der Herstellung der Vorrichtung nach dem ersten Aspekt der Erfindung seitens der Vorrichtung nach dem zweiten Aspekt der Erfindung gespeichert ist und somit beiden Vorrichtungen bekannt ist.

Gemäß einer beispielhaften Ausführungsform nach dem zweiten Aspekt der Erfindung wird das Verfahren basierend auf einer erfassten oder erhaltenen Anfrage zur Aktivierung einer weiteren Vorrichtung ausgeführt.

Die Anfrage wird beispielsweise von einem Drittanbieter und/oder einem Dienstanbieter, z. B. ein Messstellenbetreiber und/oder ein Vertreiber von Strom, Gas, Wasser und/oder Wärme an Kunden (z. B. ein Benutzer der Vorrichtung nach dem ersten Aspekt der Erfindung) erhalten bzw. empfangen.

Die weitere Vorrichtung ist beispielsweise ein Gerät, dass seitens eines Mitarbeiters, der erfasste Messwerte der Vorrichtung nach dem ersten Aspekt der Erfindung ab- bzw. auslesen möchte, mitgeführt wird.

Die Anfrage enthält oder umfasst zumindest eine Identifikationsinformation derjenigen Vorrichtung (z. B. ein intelligenter Zähler), die eine Aktion auslösen soll. Eine derartige Aktion kann beispielsweise ein erstmaliges Aktivieren der Vorrichtung zum (Fern-)Übertragen von gemessenen und/oder gespeicherten Informationen sein, ein Übermitteln von gemessenen und/oder gespeicherten Informationen und/oder ein Übermitteln von einer Firmware oder dergleichen an die Vorrichtung, um nur einige nicht-limitierende Beispiele zu nennen.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

Es zeigen:
- Fig. 1: eine schematische Darstellung einer beispielhaften Ausführungsform eines Systems nach dem dritten Aspekt der Erfindung;
- Fig. 2: ein Flussdiagramm einer beispielhaften Ausführungsform eines Verfahrens nach dem ersten Aspekt der Erfindung, das im Kontext der Erfindung beispielsweise von dem elektronischen Verbrauchsmengenzähler 130 nach Fig. 1 ausgeführt werden kann;
- Fig. 3: ein Flussdiagramm einer beispielhaften Ausführungsform eines Verfahrens nach dem zweiten Aspekt der Erfindung, das im Kontext der Erfindung beispielsweise von dem Server 110, und/oder dem Gateway 120 nach Fig. 1 ausgeführt werden kann;
- Fig. 4: eine schematische Darstellung einer beispielhaften Ausführungsform einer Vorrichtung gemäß dem ersten Aspekt der Erfindung;
- Fig. 5: eine schematische Darstellung einer beispielhaften Ausführungsform einer Vorrichtung gemäß dem zweiten Aspekt der Erfindung; und
- Fig. 6: ein schematische Prozessdiagramm, das beispielsweise von einer beispielhaften Ausführungsform eines Systems nach dem dritten Aspekt der Erfindung ausgeführt werden kann.

### Detaillierte Beschreibung einiger beispielhafter Ausführungsformen der Erfindung

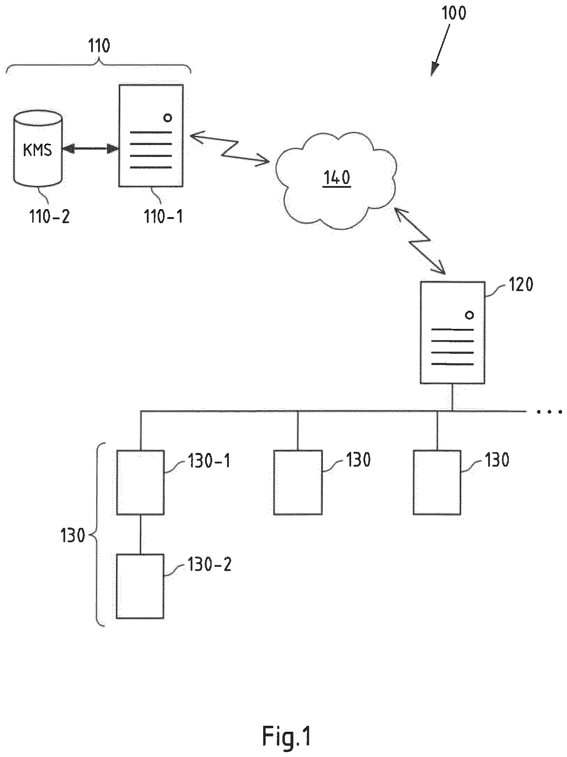

Fig. 1 ist eine schematische Darstellung einer beispielhaften Ausführungsform eines Systems 100 gemäß der vorliegenden Erfindung. Das System 100 umfasst einen Server 110, der eine Recheneinrichtung 110-1 und eine optionale Datenbank 110-2 umfasst. Es versteht sich, dass die Recheneinrichtung 110-1 und die Datenbank 110-2 auch von einer einzigen Entität umfasst sein können. Alternativ kann die optionale Datenbank 110-2 (z. B. elektrisch) mit der Recheneinrichtung 110-1 verbunden sein. Die Datenbank 110-2 und die Recheneinrichtung 110-1 umfassen beispielsweise ein KMS. Ein derartiges KMS speichert für ein oder mehrere Vorrichtungen (z. B. Vorrichtungen 130) z. B. Verknüpfungen zwischen einer jeweiligen Identifikationsinformation, einem (externen) Zählerwert, und/oder einem Schlüssel bzw. einer Schlüsselinformation, um nur einige nicht-limitierende Beispiele zu nennen, und erlaubt einen Zugriff auf eine der Vorrichtungen 130 ohne (direkten) physischen Zugriff z. B. über eine Datenschnittstelle, z. B. nur für berechtigte Personen und/oder Instanzen. Hierzu kann beispielsweise nach beispielhaften Ausgestaltungen nach allen Aspekten eine Freischaltungen der jeweiligen Vorrichtungen 130 erfolgen, wobei die jeweilige Vorrichtung 130 beispielsweise in dem KMS inkludiert wird.

Der Server 110 ist beispielsweise über ein Kommunikationsnetz 140 mit einer oder mehreren weiteren Entitäten des Systems 100 verbunden. Vorliegend ist der Server 110 mit einem Gateway 120 verbunden. Ein derartiges Gateway 120 kann beispielsweise mit einer oder mehreren Vorrichtungen 130 (z. B. jeweils ein Smartmeter) verbunden sein, z. B. über ein Bussystem, wie in Fig. 1 schematisch dargestellt.

Die Vorrichtung 130 kann beispielsweise ein Smartmeter, ein SmartHome, und/oder ein IoT Gerät sein. Vorliegend ist jede der dargestellten Vorrichtungen 130 als Smartmeter zum Erfassen eines Verbrauchs, z. B. von Strom, Gas, Wasser und/oder Wärme in einem Haushalt (in Fig. 1 nicht dargestellt) ausgebildet. Beispielsweise kann eine Vorrichtung 130 eine Steuereinrichtung 130-1, z. B. umfassend ein Kommunikationsmodul (und/oder ein Funkmodul), und eine Zähleinrichtung 130-2 zum Erfassen des Verbrauchs von Strom, Gas, Wasser und/oder Wärme umfassen. Für den Fall, dass eine Steuereinrichtung 130-1 der Vorrichtung 130 von der Zähleinrichtung 130-2 separiert ist, kann beispielsweise eine Kommunikationsverbindung (z. B. drahtlos) mittels eines Funkmoduls zwischen der Steuereinrichtung 130-1 und der Zähleinrichtung 130-2 bestehen. Über diese Kommunikationsverbindung kann beispielsweise ein von der Zähleinrichtung 130-2 erfasster Verbrauch von Strom, Gas, Wasser und/oder Wärme an die Steuereinrichtung 130-1 übermittelt werden. Anschließend kann wiederrum von der Steuereinrichtung 130-1 diese Verbrauchsinformation an das Gateway 120 und/oder an den Server 110 übermittelt werden, um nur einige nicht-limitierende Beispiele zu nennen.

Beispielhafte Ausgestaltungen der Erfindung erlauben es, dass jede der Vorrichtungen 130 beispielsweise ein Verfahren nach dem ersten Aspekt der Erfindung ausführt. Ferner kann das Gateway 120 und/oder der Server 110 beispielsweise ein Verfahren nach dem zweiten Aspekt der Erfindung ausführen. Dies ermöglicht es, dass zumindest eine der Vorrichtungen 130 mit dem Gateway 120 und/oder dem Server 110 koppelbar ist, so dass zwischen diesen Entitäten Informationen, wie etwa eine Verbrauchsinformation übermittelt werden können. Dabei erfolgt z. B. mittels der Kopplung eine Freischaltung einer Datenschnittstelle, über die auf eine jeweilige der Vorrichtungen 130 zugegriffen werden kann, wobei hierfür kein physischer (direkter) Zugriff auf die entsprechende Vorrichtung 130 erforderlich ist.

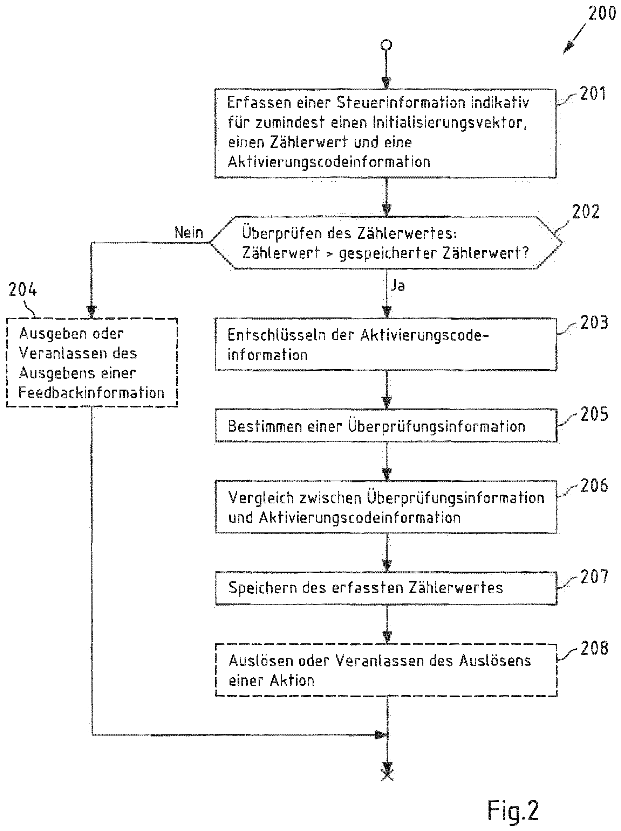

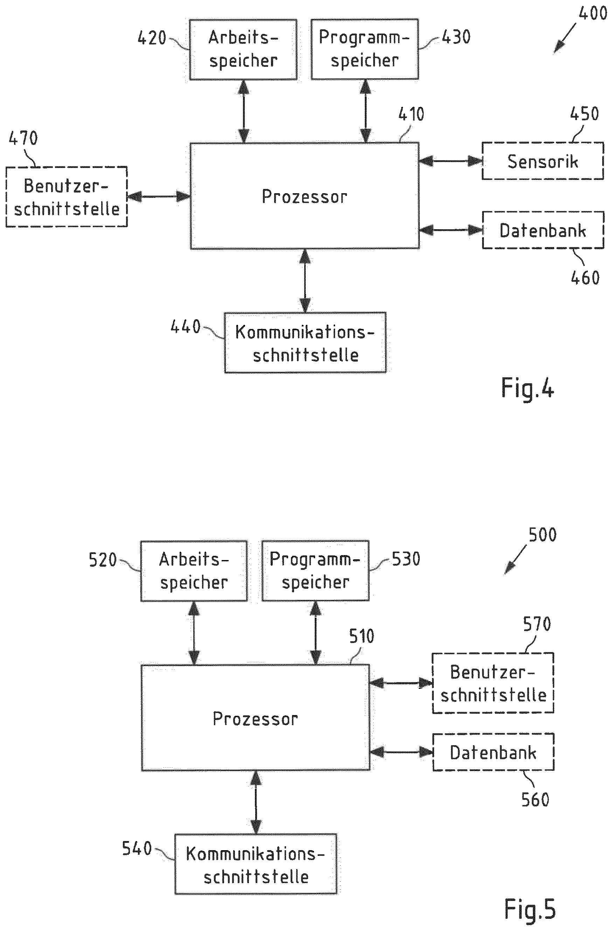

Fig. 2 stellt ein Flussdiagramm 200 einer beispielhaften Ausführungsform eines Verfahrens nach dem ersten Aspekt der Erfindung dar, das im Kontext der vorliegenden Erfindung ausgeführt werden kann. Das Verfahren wird beispielsweise von der Vorrichtung 130 der Fig. 1 ausgeführt, die beispielsweise als Vorrichtung 400 der Fig. 4 ausgebildet sein kann.

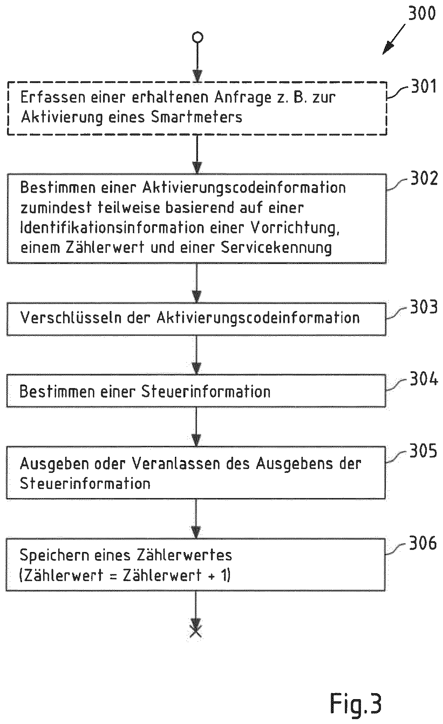

In einem ersten Schritt 201 erfolgt ein Erfassen einer Steuerinformation indikativ für zumindest einen Initialisierungsvektor, einen Zählerwert und eine Aktivierungscodeinformation. Die Steuerinformation wird beispielsweise von der Vorrichtung 130 nach Fig. 1 erfasst, indem die Steuerinformation zuvor von dem Gateway 120 und/oder dem Server 110 nach Fig. 1, die jeweils ein Flussdiagramm 300 nach Fig. 3 ausführen, empfangen wurde. Die Steuerinformation wird beispielsweise über einen von mehreren möglichen und von der Vorrichtung 130 bereitgestellten Ports erfasst (z. B. empfangen).

In einem zweiten Schritt 202 erfolgt ein Überprüfen des in dem Schritt 201 erfassten (externen) Zählerwertes, wobei z. B. ein Vergleich des Zählerwertes der erfassten Streuinformation mit einem lokal gespeicherten Zählerwert der Vorrichtung 130 nach Fig. 1 durchgeführt wird. Für den Fall, dass der Zählerwert der erfassten Steuerinformation größer ist als ein lokal gespeicherter Zählerwert, wird der Schritt 203 durchgeführt. Andernfalls wird der optionale Schritt 204 durchgeführt, oder das Flussdiagramm 200 wird direkt beendet.

In einem dritten Schritt 203 erfolgt ein Entschlüsseln Aktivierungscodeinformation des Schritts 201, die von der erfassten Steuerinformation z. B. umfasst oder repräsentiert ist. Zum Entschlüsseln wird beispielsweise eine lokal gespeicherte Schlüsselinformation, sowie der von der Steuerinformation umfasste oder repräsentierte Initialisierungsvektor verwendet.

In dem optionalen Schritt 204 erfolgt z. B. ein Ausgeben einer Feedbackinformation indikativ für das negative Ergebnis des in dem Schritt 202 durchgeführten Vergleichs. Derart kann beispielsweise das Gateway 120 der Fig. 1 über den fehlgeschlagenen Vergleich informiert werden.

In einem fünften Schritt 205 erfolgt ein Bestimmen einer Überprüfungsinformation, wobei zumindest teilweise basierend einer Identifikationsinformation der Vorrichtung, dem externen Zählerwert und einer Servicekennungsinformation indikativ für eine gemäß der erfassten Steuerinformation angefragte und seitens der Vorrichtung durchzuführende Aktion, wobei die Servicekennungsinformation unter Berücksichtigung desjenigen Ports, über den die Steuerinformation in dem Schritt 201 erfasst wurde, bestimmt wird.

In einem sechsten Schritt 206 erfolgt ein Vergleich zwischen in dem Schritt 205 bestimmten Überprüfungsinformation und der Aktivierungscodeinformation des Schritts 201.

In einem siebten Schritt 207 erfolgt ein Speichern des Zählerwertes, der von der in dem Schritt 201 erfassten Steuerinformation z. B. umfasst oder repräsentiert war, z. B. in einem lokalen Speicher, der von der Vorrichtung 130 nach Fig. 1 umfasst ist oder der zumindest mit der Vorrichtung 130 nach Fig. 1 (elektrisch) verbindbar ist. Ein evtl. bereits in dem lokalen Speicher seitens der Vorrichtung 130 gespeicherter Zählerwert wird beispielsweise durch den (externen) Zählerwert des Schritts 201 ersetzt.

In einem optionalen achten Schritt 208 erfolgt ein Auslösen oder Veranlassen des Auslösens einer Aktion, die indikativ für eine seitens der Vorrichtung 130 nach Fig. 1 auszulösende bzw. durchzuführende Aktion ist, z. B. Ausgeben einer aktuellen Verbrauchsinformation indikativ für einen Verbrauch von Strom und/oder Gas eines Haushalts, in dem die Vorrichtung 130 nach Fig. 1angeordnet ist.

Fig. 3 stellt ein Flussdiagramm 300 einer beispielhaften Ausführungsform eines Verfahrens nach dem zweiten Aspekt der Erfindung dar, das im Kontext der vorliegenden Erfindung ausgeführt werden kann. Das Verfahren wird beispielsweise von dem Gateway 120, und/oder von dem Server 110 nach der Fig. 1 ausgeführt, die beispielsweise jeweils als Vorrichtung 500 der Fig. 5 ausgebildet sein können.

In einem optionalen ersten Schritt 301 erfolgt ein Erfassen einer erhaltenen Anfrage z. B. zur Aktivierung einer Vorrichtung 130 nach Fig. 1, z. B. ausgebildet als Smartmeter.

Die Anfrage kann beispielsweise von einem Drittanbieter, z. B. einem Stromverkäufer stammen, der z. B. Verbrauchswerte eines bei einem neuen Kunden installierten Smartmeters erfassen möchte.

In einem zweiten Schritt 302 erfolgt ein Bestimmen einer Aktivierungscodeinformation zumindest teilweise basierend auf einer Identifikationsinformation einer Vorrichtung 130 nach Fig. 1, einem Zählerwert und einer Servicekennung. Der Zählerwert ist beispielsweise in der Datenbank 110-2 nach Fig. 1, z. B. die Informationen eines KMS aufweist, hinterlegt. Das Bestimmen (z. B. Generieren) der Aktivierungscodeinformation erfolgt beispielsweise mittels eines Prozessors des Gateways 120 und/oder des Servers 110 nach Fig. 1 (z. B. Prozessor 510 der Vorrichtung 500 nach Fig. 5).

In einem dritten Schritt 303 erfolgt ein Verschlüsseln der in dem Schritt 302 bestimmten Aktivierungscodeinformation, z. B. mittels einer Schlüsselinformation. Die Schlüsselinformation ist beispielsweise in der Datenbank 110-2 nach Fig. 1, z. B. die Informationen eines KMS aufweist, hinterlegt.

In einem vierten Schritt erfolgt ein Bestimmen einer Steuerinformation, wobei die Steuerinformation basierend auf der Aktivierungscodeinformation (Schritt 302 bzw. 303), einem generierten Initialisierungsvektor (z. B. eine Zufallsfolge) und dem Zählerwert (vgl. Schritt 302).

In einem fünften Schritt 305erfolgt ein Ausgeben bzw. ein Veranlassen des Ausgebens der in dem Schritt 302 erstellten Steuerinformation. Die Steuerinformation wird beispielsweise von dem Server 110 über das Gateway 120 an eine der Vorrichtungen 130 nach Fig. 1 ausgegeben. Alternativ wird die Steuerinformation beispielsweise von dem Gateway 120 direkt an eine der Vorrichtungen 130 nach Fig. 1 ausgegeben. Die Streuwertinformation wird beispielsweise an die Steuereinrichtung 130-1 der Vorrichtung 130 nach Fig. 1 ausgegeben, wobei die Steuereinrichtung 130-1 die Streuwertinformation dann entsprechend erfasst (z. B. empfängt; vgl. Schritt 201 nach Fig. 2).

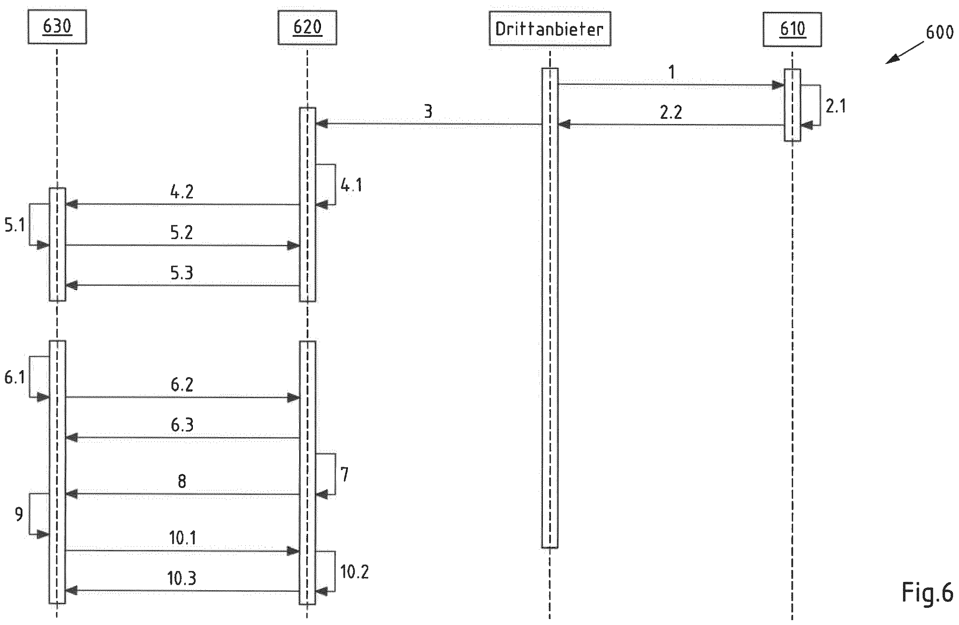

In einem sechsten Schritt 306 erfolgt ein Speichern bzw. ein Aktualisieren eines bereits gespeicherten Zählerwertes, z. B. in der Datenbank 110-2 nach Fig. 1. Insbesondere können die Flussdiagramme 200 nach Fig. 2 und 300 nach Fig. 3 nach beispielhaften Ausführungsformen der Erfindung im Zusammenspiel z. B. von dem System 100 nach Fig. 1 und/oder dem System gemäß dem Prozessdiagramm 600 der Fig. 6 ausgeführt werden.

Fig. 4 zeigt eine schematische Darstellung einer beispielhaften Ausführungsform einer Vorrichtung 400 (z. B. Vorrichtung 130 nach Fig. 1), die im Kontext der vorliegenden Erfindung eingesetzt werden kann.

Die Vorrichtung 400 kann beispielsweise die Vorrichtung 130 nach Fig. 1 repräsentieren, und dann beispielsweise das Verfahren des Flussdiagramms 200 der Fig. 2 ausführen. Die Vorrichtung 400 kann ferner beispielsweise die Vorrichtung 630 nach Fig. 6 repräsentieren, und dann beispielsweise das Verfahren des Flussdiagramms 200 der Fig. 2 ausführen.

Vorrichtung 400 umfasst einen Prozessor 410 mit zugeordnetem Arbeitsspeicher 420 und Programmspeicher 430. Der Prozessor 410 führt beispielsweise Programmanweisungen aus, die im Programmspeicher 430 gespeichert sind. Die Programmanweisungen führen das Verfahren gemäß dem ersten Aspekt der Erfindung aus. Damit enthält der Programmspeicher 430 ein Computerprogramm nach einem beispielhaften Aspekt der Erfindung und stellt ein Computerprogrammprodukt zu dessen Speicherung dar. Vorrichtung 400 stellt ein Beispiel einer Vorrichtung gemäß dem ersten Aspekt der Erfindung dar.

Der Programmspeicher 430 kann beispielsweise ein persistenter Speicher, wie beispielsweise ein Read-Only-Memory (ROM)-Speicher sein. Der Programmspeicher kann beispielsweise fest mit dem Prozessor 410 verbunden sein, kann aber alternativ auch lösbar mit dem Prozessor 410 verbunden sein, beispielsweise als Speicherkarte, Diskette oder optisches Datenträgermedium (z. B. eine CD, DVD, oder Blu-Ray). In dem Programmspeicher 430, oder in einem separaten Speicher, können auch weitere Informationen abgespeichert sein.

Der Arbeitsspeicher 420 wird beispielsweise zur Speicherung temporärer Ergebnisse während der Abarbeitung der Programmanweisungen genutzt. Es handelt sich hierbei beispielsweise um einen flüchtigen Speicher, wie beispielsweise einen Random-Access-Memory (RAM)-Speicher.

Der Prozessor 410 ist ferner beispielsweise mit einer Kommunikationsschnittstelle 440 verbunden, mit der beispielsweise ein Informationsaustausch mit anderen Vorrichtungen möglich ist (siehe die Pfeile in Fig. 1 und/oder Fig. 6).

Die Vorrichtung 400 kann auch weitere Komponenten enthalten, z. B. Sensorik 450 insbesondere zum Erfassen eines Verbrauchs von Strom, Gas, Wasser, und/oder Wärme, und/oder optional eine Datenbank 460 insbesondere zum Speichern von einer oder mehreren Zählerwerten, Identifikationsinformation, Look-Up Tabellen, oder einer Kombination hiervon, um nur einige nicht-limitierende Beispiele zu nennen. Falls Vorrichtung 400 die Vorrichtung 130 nach Fig. 1 repräsentiert, ist beispielsweise eine Steuereinrichtung bzw. Mittel zum Steuern der Vorrichtung 400 vorhanden. Die Vorrichtung 400 kann auch eine optionale Benutzerschnittstelle 470 enthalten, z. B. ein Display und/oder Eingabemittel (z. B. Tastatur und/oder Maus) zum Erfassen von einer oder mehreren Benutzereingaben und/oder zum (z. B. visuellen) Ausgeben von Informationen an einen Benutzer der Vorrichtung 400. Ferner sind diese Komponenten 450, 460, 470 beispielsweise mit dem Prozessor 410 operativ verbunden.

Falls Vorrichtung 400 die Vorrichtung 130 nach Fig. 1 repräsentiert, ist beispielsweise ein Erfassungsmittel zum Erfassen einer Steuerinformation (Schritt 201 nach Fig. 2) vorgesehen. Ferner ist beispielsweise ein Bestimmungsmittel zum Vergleichen von Zählerwerten (Schritt 206 nach Fig. 2) und/oder zum Bestimmen einer Überprüfungsinformation (Schritt 205 nach Fig. 2), um nur einige nicht-limitierende Beispiele zu nennen, vorhanden, wobei das Erfassungsmittel und/oder das Bestimmungsmittel beispielsweise als strukturelle und/oder funktionelle Einheiten eingerichtet sind und beispielsweise von dem Prozessor 410 umfasst oder mit diesem operativ verbunden sind.

Fig. 5 zeigt eine schematische Darstellung einer beispielhaften Ausführungsform einer Vorrichtung 500, die im Kontext der vorliegenden Erfindung eingesetzt werden kann.

Die Vorrichtung 500 kann beispielsweise die Vorrichtung 110 (Server) und/oder die Vorrichtung 120 (Gateway) nach Fig. 1 repräsentieren, und dann beispielsweise das Verfahren des Flussdiagramms 300 der Fig. 3 ausführen.

Vorrichtung 500 umfasst einen Prozessor 510 mit zugeordnetem Arbeitsspeicher 520 und Programmspeicher 530. Der Prozessor 510 führt beispielsweise Programmanweisungen aus, die im Programmspeicher 530 gespeichert sind. Die Programmanweisungen führen das Verfahren gemäß dem zweiten Aspekt der Erfindung aus und/oder steuern dieses. Damit enthält der Programmspeicher 530 ein Computerprogramm nach einem beispielhaften Aspekt der Erfindung und stellt ein Computerprogrammprodukt zu dessen Speicherung dar. Vorrichtung 500 stellt ein Beispiel einer Vorrichtung gemäß dem zweiten Aspekt der Erfindung dar.

Der Programmspeicher 530 kann beispielsweise ein persistenter Speicher, wie beispielsweise ein Read-Only-Memory (ROM)-Speicher sein. Der Programmspeicher kann beispielsweise fest mit dem Prozessor 510 verbunden sein, kann aber alternativ auch lösbar mit dem Prozessor 510 verbunden sein, beispielsweise als Speicherkarte, Diskette oder optisches Datenträgermedium (z. B. eine CD, DVD, oder Blu-Ray). In dem Programmspeicher 530, oder in einem separaten Speicher, können auch weitere Informationen abgespeichert sein.

Der Arbeitsspeicher 520 wird beispielsweise zur Speicherung temporärer Ergebnisse während der Abarbeitung der Programmanweisungen genutzt. Es handelt sich hierbei beispielsweise um einen flüchtigen Speicher, wie beispielsweise einen Random-Access-Memory (RAM)-Speicher.

Der Prozessor 510 ist ferner beispielsweise mit einer Kommunikationsschnittstelle 540 verbunden, mit der beispielsweise ein Informationsaustausch mit anderen Vorrichtungen möglich ist (siehe die Pfeile in Fig. 1 und/oder Fig. 6).

Die Vorrichtung 500 kann auch weitere Komponenten enthalten, z. B. eine Benutzerschnittstelle 570 insbesondere ein Display und/oder Eingabemittel (z. B. Tastatur und/oder Maus) zum Erfassen von einer oder mehreren Benutzereingaben und/oder zum (z. B. visuellen) Ausgeben von Informationen an einen Benutzer der Vorrichtung 500. Optional kann die Vorrichtung 500 eine Datenbank 560 insbesondere zum Speichern von einer oder mehreren Zählerwerten, Identifikationsinformation, Look-Up Tabellen, oder einer Kombination hiervon, um nur einige nicht-limitierende Beispiele zu nennen. Falls Vorrichtung 500 die Vorrichtung 110 und/oder 120 nach Fig. 1 repräsentiert, ist beispielsweise ein Erfassungsmittel zum Erfassen von einer Anfrage vorhanden, wobei das Erfassungsmittel beispielsweise als strukturelle und/oder funktionelle Einheit eingerichtet ist und beispielsweise von dem Prozessor 510 umfasst ist oder mit diesem operativ verbunden ist..

Falls Vorrichtung 500 die Vorrichtung 110 und/oder 120 nach Fig. 1 repräsentiert, ist beispielsweise ferner ein Bestimmungsmittel zum Bestimmen einer Aktivierungscodeinformation, und/oder zum Bestimmen einer Steuerinformation vorhanden, wobei das Bestimmungsmittel beispielsweise als strukturelle und/oder funktionelle Einheit eingerichtet ist und beispielsweise von dem Prozessor 510 umfasst ist oder mit diesem operativ verbunden ist. Ferner sind diese Komponenten 560, 570 beispielsweise mit dem Prozessor 510 operativ verbunden.

Die folgenden beispielhaften Ausgestaltungen nach allen Aspekten sollen ebenfalls als offenbart verstanden werden.

Fig. 6 zeigt ein schematisches Prozessdiagramm 600, das beispielsweise von einer beispielhaften Ausführungsform eines Systems nach dem dritten Aspekt der Erfindung ausgeführt werden kann.

Das in dem Prozessdiagramm 600 dargestellte System nach dem dritten Aspekt der Erfindung umfasst eine Vorrichtung 630 (z. B. ein Smartmeter) nach dem ersten Aspekt der Erfindung, ein Gateway 620 ausgebildet als Vorrichtung nach dem zweiten Aspekt der Erfindung und einen Server 610 ausgebildet als Vorrichtung nach dem zweiten Aspekt der Erfindung. Der Server betreibt beispielsweise ein KMS für eine oder mehrere von Vorrichtungen 630 (vgl. auch Vorrichtungen 130 der Fig. 1).

Das Smartmeter 630 umfasst einen Speicher (z. B. eine Datenbank 460 gemäß Fig. 4), in dem beispielsweise die folgenden Parameter gespeichert sind:
- Identifikationsinformation der Vorrichtung 630 ("meter ID");
- Inklusionsschlüssel der Vorrichtung 630 ("meter inclusion key");
- privater Schlüssel der Vorrichtung 630 ("meter private key" zum Entschlüsseln und Signieren, z. B. 32 Byte ECC (Elliptic Curve Cryptography);
- Aktivierungs-Zählerwert ("activation counter meter"; entspricht der Anzahl von Inklusionen);
- MSB Zählerwert der Vorrichtung 630 ("msb counter meter");
- Netzwerkschlüssel zum Zugriff auf das Gateway 620 für den Fall, dass die Vorrichtung 630 von diesem inkludiert ist ("network key"); und
- temporärer Schlüssel der Vorrichtung 630 ("one-time meter AES-key").

Das Gateway 620 umfasst einen Speicher (z. B. eine Datenbank 560 gemäß Fig. 5), in dem beispielsweise die folgenden Parameter gespeichert sind:
- öffentlicher Schlüssel des Gateway 620 ("receiving unit public key");
- privater Schlüssel des Gateway 620 ("receiving unit private key");
- öffentlicher Schlüssel der Vorrichtung 630 ("meter public key");
- Netzwerkschlüssel zum Zugriff auf das Gateway 620 ("network key"); und
- temporärer Schlüssel der Vorrichtung 630 ("one-time meter AES-key").

Das KMS des Servers 610 administriert die folgenden Parameter, die in einem Speicher, der von dem Server 610 umfasst sein kann (z. B. eine Datenbank 560 gemäß Fig. 5), hinterlegt sind:
- String Identifikationsinformation der Vorrichtung 630 ("meter ID");
- Inklusionsschlüssel der Vorrichtung 630 ("meter inclusion key"; z. B. 128 Bit AES-CBC);
- öffentlicher Schlüssel der Vorrichtung 630 ("meter public key"; 32 Byte ECC);
- Aktivierungszählerwert als unsigned Integer-Wert; und
- MSB Zählerwert als unsigned Integer-Wert.

Ferner ist in dem Prozessdiagramm 600 ein Drittanbieter dargestellt, der beispielsweise eine Initialisierung der Vorrichtung 630 anfragt.

Im Nachfolgenden werden die übertragenen Informationen, die in dem Prozessdiagramm 600 mit den Ziffern 1 bis 10.2 gekennzeichnet sind, erläutert, wobei die Angaben in eckigen Klammern die Position innerhalb einer übertragenen Information angeben:
1: Anfrage Aktivierungcode ("activation code") umfassend die Identifikationsinformation der Vorrichtung 630 ("meter ID").
2.1: Verarbeiten der Anfrage:
   i) Generieren SHA256 ("Aktion" + "meter ID" + "activation counter").
   ii) Generieren Aktivierungcode = Verschlüsseln SHA256 mit "meter inclusion key" (AES CBC + Zufalls-IV (Initialisierungsvektor des AES CBC)).
   iii) "activation counter" ++ (Aktivierungs-Zählerwert erhöhen).
2.2: "activation code", "IV für activation code", "meter ID", "activation counter", "meter public key".
3: "activation code", "IV für activation code", "meter ID", "activation counter", "meter public key".
4.1: Verarbeiten:
   i) Generieren gemeinsamer Schlüssel basierend auf öffentlichem Schlüssel der Vorrichtung 630 und eigenem privaten Schlüssel des Gateway 620.
   ii) "one-time meter AES-key" = shared key[0-15].
4.2: Broadcast einer die Vorrichtung 630 beschreibenden Information: ("activation code", "meter ID", "activation counter", "IV für activation code", "receiving unit public key", MAC (Medium Access Control) verschlüsselt mit standardmäßigem AES-128 Schlüssel + CCM (Constant Coding and Modulation))
5.1: Verarbeiten der Anfrage:
   i) Überprüfen "meter ID"
   ii) Überprüfen ob "activation counter" > "activation counter meter"
   iii) Entschlüsseln "activation code" mit "meter inclusion key" und empfangenen Initialisierungsvektor
   iv) Überprüfen, ob SHA256 ("Aktion" + "meter ID" + "activation counter") == entschlüsselter "activation code"

Für den Fall, Vorrichtung 630 ist umfasst in dem Schritt 5.1 i): Durchführen des Rücksetzens der Vorrichtung 630 auf die Werkseinstellungen:
5.2: Statusnachricht: "Rücksetzen auf Werkseinstellungen anstehend" MAC verschlüsselt mit standardmäßigem AES-128 Schlüssel + CCM
5.3: MAC ACK (Acknowledgement)

Für den Fall, Vorrichtung 630 ist nicht umfasst in dem Schritt 5.1 i):
6.1 Verarbeiten:
   v) Generieren von gemeinsamen Schlüssel mittels öffentlichem Schüssel des Gateway 620 ("receiving unit public key") und privater Schlüssel der Vorrichtung 630 ("meter private key")
   vi) "one-time meter AES-key" = gemeinsamer Schlüssel[0-15]
   vii) Bestimmen von gültiger Inklusion der Vorrichtung 630 ("inclusion authentication valid" = 1)
6.2: Vorrichtung 630 beschreibende Information (included = 0) MAC verschlüsselt mit standardmäßigem AES-128 Schlüssel + CCM
6.3: MAC ACK
7: Verarbeiten:
   i) Generieren von 14 Zufalls-Byte == R
   ii) Bestimmen 2 Byte CRC (Cyclic Redundancy Check)-16 von (R + Netzwerkschlüssel) == C
   iii) Resultierendes Datenarray X = (R[0-13] + Netzwerkschlüssel[14-29] + C[30-31]
   iv) Verschlüsseln von X mittels AES-ECB (Electronic Code Book Modus) mit Schlüssel "one-time AES-key" → "network_include (32 Bytes)
8: Senden von "network include (32 Bytes)
   MAC verschlüsselt mit standardmäßigem AES-128 Schlüssel + CCM
9: Verarbeiten:
   Wenn "inclusion authentication valid" = 1
   Definieren von "inclusion authentication valid" = 0
   Bestimmen: "activation counter meter" = "activation counter"
   Überprüfen, ob empfangene Information 32 Byte lang ist
   Entschlüsseln der Information mittels AES-ECB mit "one-time AES-key", und Überprüfen von Fehlerkorrektur CRC
   Extrahieren des Netzwerkschlüssels
   Bestimmen von "one-time AES-key" mit Zufallszahl
10.1: Senden von Vorrichtung 630 beschreibende Information (included = 1)
   MAC verschlüsselt mit standardmäßigem AES-128 Schlüssel + CCM
10.2: Inklusion erfolgreich
10.3: MAC ACK

Erfindungsgemäß ist es ermöglicht, eine sogenannte Replay-Attacke zu unterbinden, d.h. die Berechtigung zum Abruf von Informationen von dem Zähler ist jeweils nur ein einziges Mal möglich z. B. mittels des zuvor beschriebenen Prozesses gemäß dem Prozessdiagramm 600.

Beispielhafte Ausgestaltungen der vorliegenden Erfindung verwenden eine Instanz (z. B. ein KMS; z. B. umfasst von Server 610), die ein gemeinsames Geheimnis mit dem Zähler bzw. dem öffentlich zugänglichen Gerät (z. B. Vorrichtung 630, z. B. Smartmeter) teilt. Das Geheimnis ist ein Schlüssel, mit dem ein "Aktivierungscode" erzeugt werden kann, dessen Gültigkeit nur durch das jeweilige Gerät geprüft werden kann. Dazu kann beispielsweise im KMS eine Kennung von dem jeweiligen Gerät 630 gepflegt werden.

Das KMS zählt beispielsweise die Anzahl der erzeugten Aktivierungscodes und verwendet diesen Zählerstand zur Erzeugung eines Aktivierungscodes mit Hilfe des gemeinsamen Geheimnisses. Die Anzahl kann beispielsweise in aufsteigender Reihenfolge gezählt werden, wobei es nicht erforderlich ist, dass ganzzahlig und in gleichen Abständen gezählt wird (z. B. 1, 2, 3 oder 1, 5, 9,15, oder dergleichen, um nur einige nicht-limitierende Beispiele zu nennen).

Die gleichen Schlüssel können ebenfalls für weitere Services genutzt werden, z. B. Kunden-Service für den lokalen Zugriff auf Daten und Messstellenbetreiber-Service für eine Walk-By Ablesung, die beispielsweise durch die Aktionsinformation spezifizierbar ist, um nur einige nicht-limitierende Beispiele zu nennen. Es muss sichergestellt sein, dass die erzeugten Codes nur für den richtigen Service verwendet werden dürfen. Beispielsweise kann für jeden bereitgestellten Service ein eigener eines derartigen Aktivierungszählers verwendet werden.

Die Erzeugung eines Aktivierungscodes erfolgt nach folgendem Schema:
1. Bilden eines Streuwertes über die Gerätekennung (z. B. Identifikationsinformation der Vorrichtung 630; "ID") und den aktuellen Aktivierungszählerwert ("activation counter"). Zusätzlich wird die Servicekennung mit einem Zeichen ("A") oder einer Zeichenkette eingefügt, die wie bereits ausgeführt indikativ für eine Servicekennung sein kann. Beispiel: SHA256 ("A" + "ID" + "activation_counter")
2. Verschlüsseln des Streuwertes mit dem (z. B. gemeinsamen) Geheimnis unter Nutzung eines Verschlüsselungsverfahrens, das insbesondere keine Clear-Text Attacken zulässt. Beispiel: AES-CBC + IV (Hash) → Aktivierungscode
3. (Aktivierungs-) Zählerwert inkrementieren.

Die Daten ID, activation counter, Aktivierungscode und der zugehörige Initialisierungsvektor IV werden beispielsweise unverschlüsselt zum Gerät (z. B. Vorrichtung 630) übertragen.

Auch das anzubindende Gerät (z. B. Vorrichtung 630) sichert den letzten, gültigen Aktivierungszählerwert und verwirft alle Anfragen, die einen kleinen Aktivierungszählerwert enthalten. Dazu muss es nicht zuerst den Code entschlüsseln, da der Zählerwert nicht verschlüsselt übertragen wurde. Das verhindert beispielsweise eine DOS Attacke durch einen künstlich generierten Entschlüsselungsaufwand.

Sollte der empfangene Zählerwert größer als der des Gerätes sein, so bildet das Gerät einen eigenen Streuwert über die empfangenen Daten unter Nutzung der Kennung des angefragten Services, entschlüsselt den empfangenen Streuwert mit Hilfe des gemeinsamen Geheimnisses und des empfangenen IVs, und vergleicht die Streuwerte. Handelt es sich um denselben, so wird die Anfrage akzeptiert und der eigene Aktivierungszählerwert wird auf den empfangenen Wert gesetzt. Damit werden alle in der Vergangenheit ausgestellten, für den damaligen Zeitpunkt gültigen Aktivierungscodes ungültig.

Anfragen mit einer oder mehreren der folgenden Bedingungen werden beispielsweise abgelehnt:
i) bereits genutzter Zählerwert;
ii) älterer, nicht genutzter Aktivierungscode; und
iii) auf dem Weg zwischen dem KMS (z. B. Vorrichtung nach dem zweiten Aspekt der Erfindung) und Gerät (z. B. Vorrichtung nach dem ersten Aspekt der Erfindung) manipulierte(r) Aktivierungscode(s).
Insbesondere soll auch die Beschreibung eines von einer Ausführungsform umfassten Merkmals - sofern nicht explizit gegenteilig erklärt - vor-liegend nicht so verstanden werden, dass das Merkmal für die Funktion des Ausführungsbei-spiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teil-weise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehr-zahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, insbesondere ausgeführt von einer Vorrichtung (130), umfassend:
- Erfassen einer Steuerinformation indikativ für zumindest einen externen Zählerwert, einen Initialisierungsvektor und eine Aktivierungscodeinformation (201), wobei die Aktivierungscodeinformation verschlüsselte Informationen umfasst;
- Überprüfen des externen Zählerwertes (202), wobei der externe Zählerwert mit einem lokal gespeicherten Zählerwert verglichen wird;
- für den Fall, dass der lokal gespeicherte Zählerwert kleiner ist, als der externe Zählerwert:
- Entschlüsseln der Aktivierungscodeinformation zumindest teilweise basierend auf dem Initialisierungsvektor (203);
- Bestimmen einer Überprüfungsinformation zumindest teilweise basierend einer Identifikationsinformation der Vorrichtung, dem externen Zählerwert und einer Servicekennungsinformation indikativ für eine gemäß der erfassten Steuerinformation angefragte und seitens der Vorrichtung durchzuführende Aktion (205), wobei die Servicekennungsinformation unter Berücksichtigung desjenigen Ports, über den die Steuerinformation erfasst wurde, bestimmt wird; und
- Vergleich der bestimmten Überprüfungsinformation mit der Aktivierungscodeinformation (206); und
- Speichern des externen Zählerwertes als neuen lokal gespeicherten Zählerwert (207), so dass dieser gespeicherte Zählerwert zur Überprüfung eines nächsten erfassten Zählerwertes verwendet wird.

2. Verfahren nach Anspruch 1, ferner umfassend:
- für den Fall, dass der Vergleich ein positives Resultat hat:
Auslösen oder Veranlassen des Auslösens der Aktion, wobei die Aktion durch einen Port, über den die Vorrichtung die Steuerinformation erfasst hat, bestimmt ist.

3. Verfahren nach einem der vorhergehenden Ansprüche, wobei das Entschlüsseln der Aktivierungscodeinformation ferner basierend auf einer lokal gespeicherten Schlüsselinformation erfolgt.

4. Verfahren nach einem der vorhergehenden Ansprüche, ferner umfassend:
- Überprüfen der Identifikationsinformation, so dass nur dann eine durchzuführende Aktion seitens der Vorrichtung durchgeführt wird, wenn es sich bei der erfassten Identifikationsinformation um die der Vorrichtung handelt.

5. Verfahren nach einem der vorhergehenden Ansprüche, wobei die Aktion eine der folgenden Aktionen i) bis iii) ist:
i) Starten eines Schlüsselaustauschmodus, so dass eine Kopplung zwischen der Vorrichtung und einer weiteren Entität möglich ist;
ii) Ausgeben von erfassten Verbrauchswerte indikativ für eine Menge von Strom, Gas, Wasser und/oder Wärme (z. B. an einen vorbestimmten Empfänger); oder
iii) Rücksetzen der Vorrichtung auf eine Werkeinstellung, bei der sämtliche lokal gespeicherten Daten und/oder Informationen bis auf die lokal gespeicherte Schlüsselinformation gelöscht sind.

6. Verfahren nach einem der vorhergehenden Ansprüche, wobei die verschlüsselten Informationen der Aktivierungscodeinformation eine Streuwertinformation indikativ für einen Hashwert repräsentieren, der mittels einer Hashfunktion bestimmt ist, wobei ferner die Überprüfungsinformation bestimmt wird, indem die Hashfunktion zumindest teilweise auf die Identifikationsinformation der Vorrichtung, den externen Zählerwert und die Servicekennungsinformation angewendet wird, so dass die Überprüfungsinformation ebenfalls einen Hashwert repräsentiert, und wobei der Vergleich zwischen der bestimmten Überprüfungsinformation und der Aktivierungscodeinformation ein Vergleich zwischen zwei Hashwerten ist.

7. Verfahren nach einem der vorhergehenden Ansprüche, ferner umfassend:
- Ausgeben oder Veranlassen des Ausgebens einer Feedbackinformation (204), wobei die Feedbackinformation basierend auf dem Ergebnis des Vergleiches bestimmt wird, wobei die Feedbackinformation indikativ für ein Ablehnen oder Bestätigen der durchzuführenden Aktion seitens der Vorrichtung ist, und/oder indikativ für eine Anfrage durch einen unberechtigten Dritten ist, für den Fall, dass der externe Zählerwert kleiner oder gleich zu dem lokal gespeicherten Zählerwert ist.

8. Verfahren nach einem der vorhergehenden Ansprüche, wobei die Überprüfung des Zählerwertes ferner in Abhängigkeit von der durchzuführenden Aktion erfolgt, wobei ein jeweiliger Zählerwert für eine jede der durchführbaren Aktionen lokal gespeichert ist.

9. Verfahren nach einem der vorhergehenden Ansprüche, wobei der Initialisierungsvektor eine nach dem Zufallsprinzip bestimmte Zeichenfolge ist.

10. Verfahren, insbesondere ausgeführt von zumindest einem Server (110), umfassend:
- Bestimmen einer Aktivierungscodeinformation (302), wobei die Aktivierungscodeinformation basierend auf einer Identifikationsinformation einer Vorrichtung, einem Zählerwert und einer Servicekennungsinformation indikativ für eine seitens der Vorrichtung durchzuführende Aktion bestimmt wird;
- Verschlüsseln der Aktivierungscodeinformation zumindest teilweise basierend auf einem Initialisierungsvektor (303);
- Bestimmen einer Steuerinformation basierend auf der Aktivierungscodeinformation, dem Initialisierungsvektor und dem Zählerwert (304);
- Ausgeben oder Veranlassen des Ausgebens der Steuerinformation (305); und
- Speichern eines neuen Zählerwertes (306), wobei der gespeicherte Zählerwert einen höheren Wert repräsentiert als der im Rahmen des Bestimmen der Aktivierungscodeinformation verwendete Zählerwert, so dass dieser gespeicherte Zählerwert zum Bestimmen einer weiteren Aktivierungscodeinformation verwendet wird,
- wobei das Ausgeben oder Veranlassen des Ausgebens der Steuerinformation in Abhängigkeit einer durchzuführenden Aktion erfolgt, an einen Port, über den die Vorrichtung die Steuerinformation erfassen kann.

11. Verfahren nach Anspruch 10, wobei das Verschlüsseln der Aktivierungscodeinformation ferner basierend auf einer lokal gespeicherten Schlüsselinformation erfolgt.

12. Verfahren nach einem der Anspruch 10 oder 11, wobei das Verfahren basierend auf einer erfassten oder erhaltenen Anfrage zur Aktivierung einer weiteren Vorrichtung (301) ausgeführt wird.

13. Verfahren nach einem der Ansprüche 10 bis 12, wobei die Aktivierungscodeinformation von einem Hashwert repräsentiert ist, wobei der Hashwert mittels einer Hashfunktion, die auf die Identifikationsinformation, den Zählerwert und die Servicekennungsinformation angewendet wird, bestimmt ist.

14. Verfahren nach einem der Ansprüche 10 bis 13, wobei der Initialisierungsvektor eine nach dem Zufallsprinzip bestimmte Zeichenfolge ist.

15. Vorrichtung, eingerichtet zur Ausführung des Verfahrens nach einem der Ansprüche 1 bis 9 oder umfassend jeweilige Mittel zur Ausführung der Schritte des Verfahrens nach einem der Ansprüche 1 bis 9, wobei die Vorrichtung insbesondere ein elektronischer Verbrauchsmengenzähler (130) ist.

16. Vorrichtung, eingerichtet zur Ausführung des Verfahrens nach einem der Ansprüche 10 bis 14 oder umfassend jeweilige Mittel zur Ausführung der Schritte des Verfahrens nach einem der Ansprüche 10 bis 14, insbesondere ein Gateway (120) oder ein Server (110).

17. System (100) umfassend:
- zumindest eine erste Vorrichtung nach Anspruch 15; und
- zumindest eine zweite Vorrichtung nach Anspruch 16.

## Claims

1. Method, in particular carried out by an apparatus (130), comprising:
- Collecting control information indicative of at least one external meter value, an initialisation vector and activation code information (201), wherein the activation code information comprises encrypted information;
- Checking the external meter value (202), comparing the external meter value with a locally stored meter value;
- in case the locally stored meter value is smaller than the external meter value:
- Decrypting the activation code information based at least in part on the initialisation vector (203);
- Determining verification information based at least in part on identification information of the device, the external meter value, and service recognition information indicative of an action (205) requested and to be performed by the device in accordance with the collected control information, wherein the service recognition information is determined taking into account the port through which the control information was acquired; and
- Comparing the determined verification information with the activation code information (206); and
- Saving the external meter value as a new locally stored meter value (207) so that this saved meter value is used to check a next detected meter value.

2. The method of claim 1, further comprising:
- in the event that the comparison has a positive result:
Triggering or causing the action to be triggered, the action being determined by a port via which the device has acquired the control information.

3. The method according to any one of the preceding claims, wherein the decryption of the activation code information is further based on locally stored key information.

4. The method according to any one of the preceding claims, further comprising:
- checking the identification information so that an action to be performed on the part of the device is only performed if the detected identification information is that of the device.

5. The method according to any one of the preceding claims, wherein the action is one of the following actions i) to iii):
i) Starting a key exchange mode so that coupling between the device and another entity is possible;
(ii) outputting sensed consumption values indicative of a quantity of electricity, gas, water and/or heat (e.g. to a predetermined receiver); or
iii) Resetting the device to a factory setting where all locally stored data and/or information is deleted except for the locally stored key information.

6. The method according to any one of the preceding claims, wherein the encrypted information of the activation code information represents scatter value information indicative of a hash value determined by means of a hash function, wherein further the verification information is determined by applying the hash function at least in part to the device identification information, the external meter value and the service identification information such that the verification information also represents a hash value, and wherein the comparison between the determined verification information and the activation code information is a comparison between two hash values.

7. The method according to any one of the preceding claims, further comprising:
- outputting or causing the outputting of feedback information (204), the feedback information being determined based on the result of the comparison, the feedback information being indicative of a refusal or confirmation of the action to be performed on the part of the device and/or being indicative of a request by an unauthorised third party in the event that the external meter value is less than or equal to the locally stored meter value.

8. The method according to any one of the preceding claims, wherein the meter value is further checked in dependence on the action to be performed, wherein a respective meter value for each of the actions that can be performed is stored locally.

9. The method according to any one of the preceding claims, wherein the initialisation vector is a randomly determined string.

10. Method, in particular carried out by at least one server (110), comprising:
- Determining activation code information (302), wherein the activation code information is determined indicative of an action to be performed by the device based on identification information of a device, a meter value and service identification information;
- Encrypting the activation code information based at least in part on an initialisation vector (303);
- Determining control information based on the activation code information, the initialisation vector and the meter value (304);
- Outputting or causing the outputting of the control information (305); and
- Storing a new meter value (306), the stored meter value representing a higher value than the meter value used in determining the activation code information, so that this stored meter value is used to determine further activation code information,
- wherein the outputting or causing the outputting of the control information is in dependence on an action to be performed, to a port via which the device can acquire the control information.

11. The method of claim 10, wherein encrypting the activation code information is further based on locally stored key information.

12. The method according to any one of claims 10 or 11, wherein the method is performed based on a detected or received request to activate a further device (301).

13. The method according to any one of claims 10 to 12, wherein the activation code information is represented by a hash value, the hash value being determined by means of a hash function applied to the identification information, the meter value and the service identification information.

14. The method according to any one of claims 10 to 13, wherein the initialisation vector is a randomly determined string.

15. Apparatus arranged for carrying out the method according to any one of claims 1 to 9 or comprising respective means for carrying out the steps of the method according to any one of claims 1 to 9, wherein the apparatus is in particular an electronic consumption meter (130).

16. Apparatus arranged for carrying out the method according to any one of claims 10 to 14 or comprising respective means for carrying out the steps of the method according to any one of claims 10 to 14, in particular a gateway (120) or a server (110).

17. System (100) comprising:
- at least a first apparatus according to claim 15; and
- at least a second apparatus according to claim 16.

## Revendications

1. Procédé, en particulier mis en oeuvre par un dispositif (130), comprenant :
- détecter des informations de commande indicatives d'au moins une valeur de compteur externe, un vecteur d'initialisation et des informations de code d'activation (201), les informations de code d'activation comprenant des informations chiffrées ;
- vérification de la valeur de compteur externe (202), la valeur de compteur externe étant comparée à une valeur de compteur stockée localement ;
- dans le cas où la valeur du compteur enregistrée localement est inférieure à la valeur du compteur externe :
- décryptage des informations de code d'activation au moins en partie sur la base du vecteur d'initialisation (203) ;
- déterminer des informations de vérification basées au moins en partie sur des informations d'identification du dispositif, la valeur de compteur externe et des informations de reconnaissance de service indicatives d'une action (205), demandée conformément aux informations de commande détectées et devant être exécutées par le dispositif, les informations de reconnaissance de service étant déterminées en prenant en compte le port par l'intermédiaire duquel les informations de commande ont été détectées ; et
- comparaison des informations de vérification déterminées avec les informations de code d'activation (206) ; et
- mémorisation de la valeur de compteur externe en tant que nouvelle valeur de compteur mémorisée localement (207), de sorte que cette valeur de compteur mémorisée est utilisée pour vérifier une prochaine valeur de compteur détectée.

2. Procédé selon la revendication 1, comprenant en outre :
- dans le cas où la comparaison aboutit à un résultat positif :
déclencher ou provoquer le déclenchement de l'action, l'action étant déterminée par un port par l'intermédiaire duquel le dispositif a acquis les informations de commande.

3. Procédé selon l'une quelconque des revendications précédentes, dans lequel le décryptage des informations de code d'activation est en outre basé sur des informations de clé stockées localement.

4. Procédé selon l'une quelconque des revendications précédentes, comprenant en outre :
- vérification de l'information d'identification, de sorte qu'une action à effectuer par le dispositif n'est effectuée que si l'information d'identification détectée est celle du dispositif.

5. Procédé selon l'une quelconque des revendications précédentes, dans lequel l'action est l'une des actions i) à iii) suivantes :
i) le lancement d'un mode d'échange de clés de sorte qu'un couplage entre le dispositif et une autre entité soit possible ;
ii) fournir des valeurs de consommation détectées indicatives d'une quantité d'électricité, de gaz, d'eau et/ou de chaleur (par exemple à un destinataire prédéterminé) ; ou
iii) la réinitialisation du dispositif à ses paramètres d'usine, dans laquelle toutes les données et/ou informations stockées localement sont effacées, à l'exception des informations clés stockées localement.

6. Procédé selon l'une quelconque des revendications précédentes, dans lequel les informations codées des informations de code d'activation représentent des informations de valeur de dispersion indicatives d'une valeur de hachage déterminée au moyen d'une fonction de hachage, dans lequel en outre les informations de vérification sont déterminées en appliquant la fonction de hachage au moins partiellement aux informations d'identification du dispositif, à la valeur de compteur externe et aux informations d'identification de service, de sorte que les informations de vérification représentent également une valeur de hachage, et dans lequel la comparaison entre les informations de vérification déterminées et les informations de code d'activation est une comparaison entre deux valeurs de hachage.

7. Procédé selon l'une quelconque des revendications précédentes, comprenant en outre :
- mettre ou faire mettre une information de rétroaction (204), l'information de rétroaction étant déterminée sur la base du résultat de la comparaison, l'information de rétroaction étant indicative d'un refus ou d'une confirmation de l'action à effectuer par le dispositif, et/ou indicative d'une demande par un tiers non autorisé, dans le cas où la valeur de compteur externe est inférieure ou égale à la valeur de compteur stockée localement.

8. Procédé selon l'une quelconque des revendications précédentes, dans lequel la vérification de la valeur du compteur est en outre effectuée en fonction de l'action à effectuer, une valeur de compteur respective étant stockée localement pour chacune des actions réalisables.

9. Procédé selon l'une des revendications précédentes, dans lequel le vecteur d'initialisation est une chaîne de caractères déterminée de manière aléatoire.

10. Procédé, exécuté en particulier par au moins un serveur (110), comprenant
- déterminer des informations de code d'activation (302), les informations de code d'activation étant déterminées sur la base d'informations d'identification d'un dispositif, d'une valeur de compteur et d'informations d'identification de service indicatives d'une action à effectuer par le dispositif ;
- chiffrer les informations de code d'activation en se basant au moins en partie sur un vecteur d'initialisation (303) ;
- déterminer une information de commande sur la base de l'information de code d'activation, du vecteur d'initialisation et de la valeur de compteur (304) ;
- émettre ou faire émettre les informations de commande (305) ; et
- la mémorisation d'une nouvelle valeur de compteur (306), la valeur de compteur mémorisée représentant une valeur supérieure à la valeur de compteur utilisée dans le cadre de la détermination de l'information de code d'activation, de sorte que cette valeur de compteur mémorisée est utilisée pour déterminer une autre information de code d'activation,
- l'émission ou le déclenchement de l'émission de l'information de commande s'effectuant en fonction d'une action à effectuer, à un port par lequel le dispositif peut saisir l'information de commande.

11. Procédé selon la revendication 10, dans lequel le cryptage des informations de code d'activation est en outre basé sur des informations de clé stockées localement.

12. Procédé selon l'une quelconque des revendications 10 ou 11, dans lequel le procédé est exécuté sur la base d'une demande d'activation d'un autre dispositif (301) détectée ou reçue.

13. Procédé selon l'une quelconque des revendications 10 à 12, dans lequel l'information de code d'activation est représentée par une valeur de hachage, la valeur de hachage étant déterminée au moyen d'une fonction de hachage appliquée à l'information d'identification, à la valeur de compteur et à l'information d'identification de service.

14. Procédé selon l'une quelconque des revendications 10 à 13, dans lequel le vecteur d'initialisation est une chaîne de caractères déterminée de manière aléatoire.

15. Dispositif agencé pour mettre en oeuvre le procédé selon l'une des revendications 1 à 9 ou comprenant des moyens respectifs pour mettre en oeuvre les étapes du procédé selon l'une des revendications 1 à 9, ledit dispositif étant notamment un compteur électronique de consommation (130).

16. Dispositif agencé pour mettre en oeuvre le procédé selon l'une des revendications 10 à 14 ou comprenant des moyens respectifs pour mettre en oeuvre les étapes du procédé selon l'une des revendications 10 à 14, notamment une passerelle (120) ou un serveur (110).

17. Système (100) comprenant :
- au moins un premier dispositif selon la revendication 15 ; et
- au moins un deuxième dispositif selon la revendication 16.
